(19) Europäisches Patentamt
European Patent Office
Office européen des brevets

(11) Veröffentlichungsnummer: **0 043 575**
**B1**

(12) # EUROPÄISCHE PATENTSCHRIFT

(45) Veröffentlichungstag der Patentschrift: **25.01.84**

(51) Int. Cl.³: **C 09 B 62/507,** D 06 P 3/66, D 06 P 3/10

(21) Anmeldenummer: **81105200.0**

(22) Anmeldetag: **04.07.81**

(54) **Wasserlösliche Azoverbindungen, Verfahren zu ihrer Herstellung und ihre Verwendung als Farbstoffe.**

(30) Priorität: **09.07.80 DE 3025904**

(43) Veröffentlichungstag der Anmeldung: **13.01.82 Patentblatt 82/2**

(45) Bekanntmachung des Hinweises auf die Patenterteilung: **25.01.84 Patentblatt 84/4**

(84) Benannte Vertragsstaaten: **CH DE FR GB IT LI**

(56) Entgegenhaltungen:
**FR - A - 2 224 525**
**FR - A - 2 248 301**

(73) Patentinhaber: **HOECHST AKTIENGESELLSCHAFT, Postfach 80 03 20, D-6230 Frankfurt am Main 80 (DE)**

(72) Erfinder: **Mischke, Peter, Dr., Eichhornweg 2, D-6232 Bad Soden am Taunus (DE)**
Erfinder: **Fuchs, Hermann, Dr., Altenhainer Strasse 2, D-6240 Königstein/Taunus (DE)**
Erfinder: **Fleckenstein, Erwin, Dr., Solmsstrasse 10, D-6238 Hofheim am Taunus (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Wasserlösliche Azoverbindungen, Verfahren zu ihrer Herstellung und ihre Verwendung als Farbstoffe

Die Erfindung liegt auf dem technischen Gebiet der wasserlöslichen Azofarbstoffe, die faserreaktive Eigenschaften besitzen.

Aus der FR-A-2 248 301 sind Azofarbstoffe mit einer faserreaktion β-Sulfatoäthylsulfonyl- oder Vinylsulfonylgruppe bekannt, die eine Diaminopyridin-Kupplungskomponente enthalten. Diese bekannten Farbstoffe zeigen jedoch gewisse anwendungstechnische Mängel.

Mit der vorliegenden Erfindung wurden nunmehr neue, wertvolle wasserlösliche Azoverbindungen gefunden, die die allgemeine Formel (1)

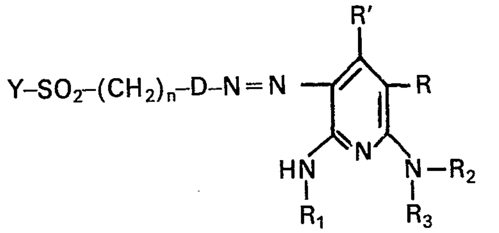

besitzen. In dieser Formel (1) bedeuten:

Y ist die Vinylgruppe oder eine Gruppe der Formel $-CH_2-CH_2-Z$, in welcher Z einen anorganischen oder organischen, alkalisch eliminierbaren Rest oder eine Hydroxygruppe bedeutet;

n steht für die Zahl Null, 1 oder 2;

D ist der Phenylen- oder Naphthylenrest, der durch 1 oder 2 Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Chlor, Brom, Fluor und Carboxy und/oder durch 1 Nitrogruppe und/oder durch 1 Sulfogruppe substituiert sein kann,

oder ist der bivalente Phenylazophenyl-, Phenylazonaphthyl-, Naphthylazophenyl- oder Naphthylazonaphthyl-Rest, in welchen jeder Phenyl- und Naphthylrest durch 1 oder 2 Substituenten aus der Gruppe niederesAlkyl, niederes Alkoxy, Hydroxy, Chlor, Brom und Fluor und/ oder durch eine niedere Alkanoylamino-, Sulfo- oder Carboxygruppe substituiert sein kann, oder

ist der Benthiazol-2-yl-Rest, der im Benzolkern durch einen Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Nitro, Chlor, Brom, Fluor und Sulfo substituiert sein kann;

R ist ein Wasserstoffatom, bevorzugt jedoch eine Cyan-, niedere Carbalkoxy-, Carbophenoxy-, Carbamoyl-, eine durch niederes Alkyl und/oder Phenyl mono- oder disubstituierte Carbamoyl-, eine niedere Alkylsulfonyl- oder eine Arylsulfonylgruppe;

R' ist ein Wasserstoffatom oder eine niedere Alkenylgruppe oder eine gegebenenfalls substituierte niedere Alkylgruppe oder eine Cycloalkylgruppe oder ein Arylrest;

$R_1$ ist ein Wasserstoffatom, eine Sulfonsäuregruppe oder eine niedere Alkenylgruppe, eine gegebenenfalls substituierte niedere Alkylgruppe, eine Cycloalkylgruppe, ein Arylrest oder ein gesättigter, ungesättigter oder aromatischer heterocyclischer Rest;

$R_2$ ist ein Wasserstoffatom, eine niedere Alkenylgruppe oder eine gegebenenfalls substituierte Alkylgruppe;

$R_3$ ist ein Wasserstoffatom, eine Sulfonsäuregruppe oder eine niedere Alkenylgruppe, eine gegebenenfalls substituierte niedere Alkylgruppe, eine Cycloalkylgruppe, ein Arylrest oder ein gesättigter, ungesättigter oder aromatischer heterocyclischer Rest, oder

$R_2$ und $R_3$ bilden zusammen mit dem Stickstoffatom einen gegebenenfalls ein weiteres Heteroatom enthaltenden heterocyclischen gesättigten oder ungesättigten Ring.

Die Formelglieder $R_1$, $R_2$ und $R_3$ können zueinander gleiche oder voneinander verschiedene Bedeutungen besitzen.

Die erfindungsgemässen Azoverbindungen der allgemeinen Formel (1) enthalten neben der gegebenenfalls wasserlöslich machenden Abgangsgruppe zwingend mindestens eine Sulfonsäure-, Phosphonsäure-, Phosphato- oder Sulfatogruppe oder zwei Carboxygruppen.

Von den erfindungsgemässen Azoverbindungen sind bevorzugt diejenigen, in denen der Formelrest Y für die Vinylgruppe oder die β-Sulfatoäthylgruppe steht.

Die Angaben «niedere» bedeuten hier wie im folgenden, dass der in der Gruppe enthaltene Alkyl- oder Alkylen- oder Alkenylrest aus 1 bis 6 C-Atomen, bevorzugt aus 1 bis 4 C-Atomen besteht.

Die substituierten niederen Alkylgruppen enthalten bevorzugt einen oder zwei Substituenten, die gleich oder verschieden voneinander sein können; diese Substituenten sind vorzugsweise niedere Alkoxygruppen, niedere Alkoxyalkoxygruppen, niedere Hydroxyalkoxygruppen, niedere Phenoxyalkoxygruppen, Arylreste, wie die Phenyl- und Naphthyl- oder eine durch niederes Alkyl, niederes Alkoxy- Chlor, Carboxy, Acetylamino und/oder Sulfo substituierte Phenyl- oder Naphthylgruppe, ein Chlor- oder Bromatom, die Cyan- oder Hydroxygruppe, eine niedere Alkanoylamino-, eine niedere Alkanoyloxy-, die Sulfo-, Carboxy-, Sulfato-, Phosphato-, Carbamoylgruppe und Phosphonsäuregruppe.

Cycloalkylgruppen sind bevorzugt der Cyclohexyl- und Cyclopentylrest, die durch 1, 2 oder 3 Methylgruppen substituiert sein können, oder ein Endomethylencyclohexylrest. Arylreste sind bevorzugt der Phenyl- oder Naphthylrest, die durch 1, 2 oder 3 Substituenten aus der Gruppe niederes Alkyl, niederes Alkoxy, Chlor, niederes Alkanoylamino, Carboxy und Sulfo substituiert sein können. Heterocyclische Reste, einschliesslich der Ringe, die sich zusammen aus den Formelgliedern $R_2$ und $R_3$ und dem Stickstoffatom bilden, sind beispielsweise der Piperidyl-, Morpholyl-, Piperazyl- oder Pyrrolidylrest.

Alkalisch eliminierte Gruppen Z sind beispielsweise Halogenatome, wie das Chlor-, Brom- oder Fluoratom, Estergruppen organischer Carbon- und Sulfonsäuren, wie ein niederer Alkanoyloxyrest, beispielsweise der Acetoxyrest, oder ein Acyloxyrest einer aromatischen Carbon- oder Sulfonsäure, wie der Benzoyloxy-, Sulfobenzoyloxy-, Benzosulfonyloxy- oder Toluolsulfonyloxyrest, des weiteren beispielsweise die Monoestergruppen der Phosphorsäure oder der Schwefelsäure oder der Thioschwefelsäure entsprechend den Formeln, in Form der freien Säuren geschrieben, $-OPO_3H_2$ bzw. $-OSO_3H$ bzw. $-S-SO_3H$, ebenso die niederen Alkylsulfonylamino- und Arylsulfonylaminogruppen, die Phenoxygruppe, die Dialkylaminogruppen mit Alkylgruppen von jeweils 1 bis 4 C-Atomen, wie die Dimethylamino- und Diäthylaminogruppe.

Die neuen Azoverbindungen können sowohl in Form der freien Säure als auch in Form ihrer Salze vorliegen. Bevorzugt sind sie in Form der Salze, insbesondere der Alkali- und Erdalkalimetallsalze, hiervon insbesondere die Natrium-, Kalium- und auch Calciumsalze. Die neuen Azoverbindungen finden bevorzugt in Form dieser Salze, bevorzugt der Alkalimetallsalze, Verwendung zum Färben und Bedrucken von Materialien aus hydroxy- oder carbonamidgruppenhaltigen Fasermaterialien oder von Leder.

Von den erfindungsgemässen Azoverbindungen der allgemeinen Formel sind die bevorzugt zu nennen, in welchen D für den Phenylenrest steht, der durch weitere Substituenten nicht substituiert ist oder als weitere Substituenten eine Sulfonsäuregruppe und/oder 1 oder 2 Substituenten aus der Gruppe niederes Alkyl, niederes Alkoxy, Carboxy, Chlor und Brom enthalten kann, oder in welchen D ein Naphthylenrest ist, der keinen weiteren Substituenten enthält oder zusätzlich durch eine Sulfo- und/oder eine niedere Alkyl-, niedere Alkoxy-, Acetylamino- oder ein Chloratom substituiert sein kann, oder in welchen D der bivalente Phenylazophenyl- oder Phenylazonaphthyl- oder Naphthylazonaphthyl-Rest ist, wobei diese aromatischen Reste keine weiteren Substituenten enthalten oder zusätzlich eine oder beide durch jeweils eine Sulfonsäuregruppe und/oder ein oder zwei Substituenten aus der Gruppe niederes Alkyl, niederes Alkoxy, Chlor und Carboxy substituiert sein können, oder in welchen D den Benzthiazolylrest bedeutet.

Von den erfindungsgemässen Azoverbindungen sind weiterhin solche als bevorzugt zu nennen, in welchen R für eine Cyan-, Carbamoyl-, Carbomethoxy- oder Carbäthoxygruppe steht, R' die Methyl- oder Äthylgruppe bedeutet, $R_1$ ein Wasserstoffatom oder eine niedere Alkylgruppe bedeutet, die durch 1 oder 2 Substituenten aus der Gruppe niederes Alkoxy, Hydroxy, niederes Alkoxyalkoxy, niederes Hydroxyalkoxy, Acetyloxy, Cyan, Acetylamino, Acetyloxy, Sulfo, Carboxy, Sulfato, Phosphato, Carbamoyl, Sulfophenyl und durch niederes Alkyl, niederes Alkoxy, Acetylamino und/oder Chlor substituiertes Sulfophenyl substituiert sein kann, $R_2$ ein Wasserstoffatom oder eine niedere Alkylgruppe bedeutet, die durch 1 oder 2 Substituenten aus der Gruppe niederes Alkoxy, Hydroxy, niederes Alkoxyalkoxy, niederes Hydroxyalkoxy, Cyan, Acetylamino, Acetyloxy, Sulfo, Carboxy, Sulfato, Phosphato, Carbamoyl, Sulfophenyl und durch niederes Alkyl, niederes Alkoxy, Acetylamino und/oder Chlor substituiertes Sulfophenyl substituiert sein kann, und $R_3$ ein Wasserstoffatom oder eine niedere Alkylgruppe bedeutet, die durch 1 oder 2 Substituenten aus der Gruppe niederes Alkoxy, Hydroxy, niederes Alkoxyalkoxy, niederes Hydroxyalkoxy, Acetyloxy, Cyan, Acetylamino, Sulfo, Carboxy, Sulfato, Phosphato, Carbamoyl, Sulfophenyl und durch niederes Alkyl, niederes Alkoxy, Acetylamino und/oder Chlor substituiertes Sulfophenyl substituiert sein kann.

Die vorliegende Erfindung betrifft weiterhin Verfahren zur Herstellung der obengenannten und definierten Azoverbindungen der allgemeinen Formel (1). Diese Verbindungen können erfindungsgemäss hergestellt werden, indem man eine Verbindung der allgemeinen Formel (2)

$$Y-SO_2-(CH_2)_n-D-NH_2 \qquad (2)$$

in welcher D, n und Y die obengenannten Bedeutungen haben, diazotiert und mit einer Kupplungskomponente der allgemeinen Formel (3)

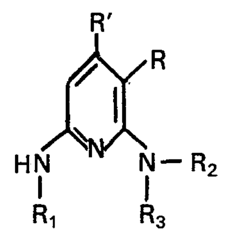

(3)

in welcher R, R', $R_1$, $R_2$ und $R_3$ die obengenannten Bedeutungen haben, kuppelt und gegebenenfalls im Falle, dass Y für die β-Hydroxyäthyl-Gruppe steht und/oder eine oder beide oder drei der Formelglieder $R_1$, $R_2$ und $R_3$ eine durch Hydroxy oder niederes Hydroxyalkoxy substituierte Alkylgruppe darstellen, diese β-Hydroxyäthylgruppe des Formelgliedes Y und eine oder mehrere dieser Hydroxygruppen in $R_1$, $R_2$ und $R_3$ mittels eines Sulfatierungsmittels oder eines Phosphatierungsmittels in die entsprechenden Sulfato- bzw. Phosphatoderivate überführt, wobei bei dieser Diazotierungs- und Kupplungsreaktion die beiden Reaktionskomponenten so ausgewählt werden, dass mindestens eine von ihnen mindestens eine der obengenannten wasserlöslich machenden Gruppen neben der gegebenenfalls wasserlöslich machenden faserreaktiven Gruppe (entsprechend Y) enthält oder eine sulfatier- oder phosphatierbare Hydroxygruppe enthält, die anschliessend mit einem Sulfatierungs- oder Phosphatierungsmittel umgesetzt werden kann.

Verbindungen der allgemeinen Formel (1), in denen in der Kupplungskomponente die Formelglieder R, R', $R_1$ und/oder $R_3$ einen Arylrest bedeuten und/oder eine Gruppe bedeuten, die einen Arylrest enthält, und ein oder zwei dieser Arylreste eine oder zwei Sulfogruppen besitzen und/oder diese Formelglieder eine Sulfatoalkylgruppe enthalten und/oder eine Sulfatoalkylgruppe bedeuten, können in erfindungsgemässer Weise auch so hergestellt werden, dass man eine Azoverbindung, die der allgemeinen Formel (1) entspricht, in welcher jedoch die Formelglieder R, R', $R_1$ und/oder $R_3$ einen Arylrest bedeuten und/oder enthalten, die keine oder insgesamt nur eine Sulfogruppe besitzen, und/oder eines oder mehrere dieser Formelglieder eine der obengenannten Alkylgruppen besitzt, die durch Hydroxy substituiert sind, mit einem Sulfierungsmittel, wie beispielsweise Oleum, vorzugsweise bei einer Temperatur zwischen 15 und 60 °C, umsetzt und hierbei eine oder zwei Sulfogruppen in den oder die Arylreste einführt und/oder die Hydroxygruppe(n) zur Sulfatogruppe(n) verestert. Die Verfahrensvariante kann auch mit der vorhergehenden kombiniert werden, in welcher die für Y stehende β-Hydroxyäthylgruppe in der Azoverbindung nachträglich sulfatisiert wird.

Geeignete Sulfatierungsmittel sind beispielsweise 90- bis 100%ige Schwefelsäure, Chlorsulfonsäure, Amidosulfonsäure oder andere Schwefeltrioxid abgebende Verbindungen. Geeignete Phosphatierungsmittel sind beispielsweise konzentrierte Phosphorsäure, Pyro-, Meta- oder Polyphosphorsäure, Polyphosphorsäurealkylester, Phosphoroxychlorid oder Gemische aus Phosphorsäure und Phosphor (V)-oxid.

Aromatische Amine der allgemeinen Formel (2), die als Diazokomponenten zur Herstellung der erfindungsgemässen Verbindungen dienen, sind beispielsweise insbesondere folgende:

4-β-Sulfatoäthylsulfonyl-anilin, 4-β-Chloräthylsulfonyl-anilin, 4-β-Phosphatoäthylsulfonylanilin, 4-Vinylsulfonyl-anilin, 4-β-Thiosulfatoäthylsulfonyl-anilin, 2-Sulfo-4-β-sulfatoäthylsulfonyl-anilin, 2-Brom-4-β-sulfatoäthylsulfonyl-anilin, 2-Chlor-2-β-sulfatoäthylsulfonyl-anilin, 2-Chlor-5-β-chloräthylsulfonyl-anilin, 3-β-Sulfatoäthylsulfonyl-anilin, 2-Brom- 5-β-sulfatoäthylsulfonyl-anilin, 2,6-Dichlor-4-β-sulfatoäthylsulfonyl-anilin, 2,6-Dibrom-4-β-sulfatoäthylsulfonyl-anilin, 2,5-Dichlor-4-β-sulfatoäthylsulfonyl-anilin, 2-Methyl-5-β-sulfatoäthylsulfonyl-anilin, 2-Methoxy-5-β-sulfatoäthylsulfonyl-anilin, 2-Methoxy-4-β-sulfatoäthylsulfonyl-anilin, 2-Methyl-6-chlor-4-β-sulfatoäthylsulfonyl-anilin, 2,6-Dimethyl-4-β-sulfatoäthylsulfonyl-anilin, 2,6-Dimethyl-3-β-sulfatoäthylsulfonyl-anilin, 2,5-Dimethoxy-4-β-sulfatoäthylsulfonyl-anilin, 2-Methoxy-5-methyl-4-β-sulfatoäthylsulfonyl-anilin, 2-Nitro-4-β-sulfatoäthylsulfonyl-anilin, 4-Nitro-2-β-sulfatoäthylsulfonylanilin, 4-Aminobenzoesäure-(3'-β-sulfatoäthylsulfonyl)-anilid, 6-β-Sulfatoäthylsulfonyl-2-naphthylamin, 1-Sulfo-6-β-sulfatoäthylsulfonyl-2-naphthylamin, 8-β-Sulfatoäthylsulfonyl-2-naphthylamin, 6-Sulfo-8-β-sulfatoäthylsulfonyl-2-naphthylamin, 4-β-Sulfatoäthylsulfonyl-4'-aminoazobenzol,4-β-Sulfatoäthylsulfonyl-3'-sulfo-4'-aminobenzol4-β-Sulfatoäthylsulfonyl-3',6'-dimethyl-4'-aminoazobenzol, 4-(2'-Sulfo-4'-β-sulfatoäthylsulfonylphenylazo)-naphthylamin-(1)-7-sulfonsäure, 6-β-Vinylsulfonyl-2-aminobenzthiazol, 6-β-Sulfatoäthylsulfonyl-2-aminobenzthiazol, 4-ω-(β-Sulfatoäthylsulfonyl)-tolylamin, 3-ω-(β-sulfatoäthylsulfonyl)-tolylamin, 6-Methoxy-3-ω-(β-sulfatoäthylsulfonyl)-totylamin, 4-Methoxy-3-ω-(β-sulfatoäthylsulfonyl)-tolylamin, 4-Methyl-3,5-bis-(β-sulfatoäthylsulfonylmethyl)-anilin, 4-ω-(β-Sulfatoäthylsulfonyl)-äthyl-anilin, 3-ω-(β-Sulfatoäthylsulfonyl)-äthyl-anilin, 5-(β-Sulfatoäthylsulfonylmethyl)-1-naphthylamin, 3-Carboxy-4-amino-1-[1'-sulfo6'-(β-sulfatoäthylsulfonyl)-2'-naphthylazo]-benzol und 4-Amino-(6,7)-sulfo-1-[6'-sulfo-8'-(β-sulfatoäthylsulfonyl)-1'-naphthylazo]-naphthalin oder deren β-Hydroxyäthylsulfonyl-Abkömmlinge.

Die Verbindungen der Formel (2) sind bekannt und lassen sich in der in der Literatur vielfach beschriebenen Weise herstellen. Beispielsweise erhält man die bevorzugten Verbindungen der Formel (2) mit einer β-Sulfatoäthylsulfonylgruppe aus den entsprechenden β-Hydroxy-äthylsulfonyl-Verbindungen durch Veresterung, wie beispielsweise in der deutschen Patentschrift 1 150 163 oder in der deutschen Patentschrift 1 443 877 beschrieben. Die so hergestellten β-Sulfatoäthylsulfonyl-Verbindungen der Formel (2) können direkt, ohne Zwischenisolierung aus dem Veresterungsansatz, in das erfindungsgemässe Herstellungsverfahren der Synthese der Verbindungen der Formel (1) eingesetzt werden.

Die zur Synthese der Verbindungen der Formel (1) als Kupplungskomponenten verwendeten Diaminopyridine der Formel (3) können ebenfalls in bekannter Weise durch Umsetzung der entsprechenden 2,6-Dichlor- oder 2,6-Dibrom-pyridine mit den entsprechenden Aminen der Formeln $HNR_1$ und/oder $NR_2R_3$ mit $R_1$, $R_2$ und $R_3$ der obengenannten Bedeutung erhalten werden. Der Austausch der Halogenatome durch die Amine kann gegebenenfalls in zwei Stufen erfolgen, wobei bei tieferer Temperatur, je nach Basizität des eingesetzten Amins, beispielsweise bei einer Temperatur zwischen 30 und 100 °C, zunächst ein Chlor- bzw. Bromatom gegen Ammoniak (falls $R_1$ gleich Wasserstoff ist) oder ein primäres Amin der Formel $HNR_1$ und dann bei höherer Temperatur, beispielsweise bei einer Temperatur zwischen 100 und 200 °C, das zweite Chlor- bzw. Bromatom gegen Ammoniak oder ein primäres oder sekundäres Amin der Formel $NR_2R_3$ ausgetauscht wird. Auf diese Weise lassen sich zwei verschiedene Aminoreste einführen.

Zur Einführung gleicher Aminoreste wird die Umsetzung bei ca. 100–200 °C mit einem dieser primären oder sekundären Amine oder Ammoniak vorgenommen.

Die Umsetzung der erwähnten Dihalogen-pyridine mit den erwähnten Aminen bzw. Ammoniak kann in einem indifferenten organischen Lösungsmittel in Gegenwart eines säurebindenden Mittels, wie beispielsweise Triäthyl- oder Triäthanolamin, einem Alkalicarbonat oder Magnesiumoxid oder in einem Überschuss dieses Amins, gegebenenfalls oder erforderlichenfalls unter Druck, durchgeführt werden.

Primäre und sekundäre aliphatische, cycloaliphatische, araliphatische, aromatische und heterocyclische Amine entsprechend den oben erwähnten Formeln $HNR_1$ und $NR_2R_3$ sind beispielsweise:

Methylamin, Äthylamin, 2-Hydroxyäthylamin, 2-Methoxyäthylamin, 2-Äthoxyäthylamin, 2-Hydroxyäthoxyäthylamin, 2-Phenoxyäthylamin, Chloräthylamin, n- und iso-Propylamin, 3-Hydroxy-, 3-Methoxy-, 3-Äthoxy- und 3-iso-Propoxypropylamin, 3-Cyanpropylamin, Allylamin, 1- und 2-Methallylamin, Monoacetylpropylendiamin-(1,3), n-, iso-, sec.- und tert.-Butylamin, 2-Amino-2-methylpropanol-(1), Crotylamin, n- und iso-Amylamin, Aminopropionsäure, ε-Aminocapronsäure, Taurin, 2-Aminoäthanphosphonsäure, Cyalohexylamin, Norbornylamin, Benzylamin, Phenyläthylamin, Anilin, Methyl- und Methoxyaniline, Dimethylaniline, Aminonaphthaline, N,N-Diäthyl-äthylendiamin, N,N-Dimethyl- und N,N-Diäthylpropylendiamin-(1,3), Dimethylamin, Diäthylamin, N-Bis-(2-hydroxyäthyl)-amin, N-Bis-(2-cyanäthyl)-amin, N-Methyl-, N-iso-Propyl-, N,n-Butyl-, N-Cyclohexyl- und N-Benzyl-(2-hydroxyäthyl)-amin, Di-n- und Di-iso-Propylamin, Di-n- und Di-iso-Butylamin, Di-n-Amyl- und Di-n-Hexylamin, Morpholin, Pyrrolidin, Piperidin, N-Methyl-piperazin, N-Methyl- und N-Äthyl-cyclohexylamin, N-Methyl-benzylamin, N-Methyl-, N-Äthyl- und N-β-Hydroxyäthylanilin, N-β-Hydroxyäthyl-3-chloranilin und 2-Aminoäthanol-monophosphorsäureester.

Die Diazotierung der Amine der Formel (2) kann nach allgemein bekannten Methoden, beispielsweise durch Einwirkung von Alkalinitrit und einer anorganischen Säure, wie Salzsäure, Schwefelsäure oder Phosphorsäure, oder durch Nitrosylschwefelsäure erfolgen.

Die Kupplung mit den Kupplungskomponenten der Formel (3) kann ebenfalls in an sich bekannter Weise in neutralem bis saurem Milieu, bevorzugt in einem pH-Bereich zwischen 1 und 7 und bei einer Temperatur zwischen $-5$ °C und $+25$ °C, gegebenenfalls in Gegenwart von Natriumacetat oder ähnlichen, die Kupplungsgeschwindigkeit beeinflussenden Puffersubstanzen oder Katalysatoren, wie beispielsweise Dimethylformamid oder Pyridin, vorgenommen werden.

Die erfindungsgemäss hergestellten Verbindungen der Formel (1) können durch Aussalzen mittels Elektrolyten, beispielsweise Natriumchlorid oder Kaliumchlorid, vorteilhaft nach Einstellung des Reaktionsgemisches auf einen pH-Wert von 3,5 bis 7,0, aus der Reaktionslösung abgeschieden werden; nach Filtration werden sie getrocknet. Weiterhin lassen sich die erfindungsgemässen Verbindungen aus ihren Syntheseansätzen durch Eindampfen oder Sprühtrocknen isolieren. In Fällen, in denen in der anfallenden Reaktionslösung grössere Mengen an Sulfationen vorliegen, empfiehlt es sich, die Sulfationen vor der Sprühtrocknung als schwerlösliche Salze (beispielsweise als Calciumsulfat) auszufällen. Es ist auch möglich, die nach der Synthese erhaltenen Lösungen der Verbindungen der Formel (1), gegebenenfalls nach Zusatz von Puffersubstanzen, direkt als Flüssigpräparation der färberischen Verwendung zuzuführen.

Die neuen Verbindungen der Formel (1) eignen sich als Farbstoffe, insbesondere als faserreaktive Farbstoffe; sie lassen sich bevorzugt auf den nachgenannten Substraten nach den für Reaktivfarbstoffe bekannten Anwendungsverfahren applizieren und echt fixieren.

Gegenstand der vorliegenden Erfindung ist somit auch die Verwendung der Verbindungen der Formel (1) als Farbstoffe, insbesondere zum Färben und Bedrucken von Cellulosefasern und natürlichen oder synthetischen Polyamidfasern oder von Leder bzw. ein Verfahren zum Färben und Bedrucken von Cellulosefasermaterialien oder natürlichen oder synthetischen Polyamidfasermaterialien oder von Leder unter Verwendung der Verbindungen der Formel (1). Als Cellulosefasermaterialien sind Baumwolle und regenerierte Cellulose, wie Viskoseseide, sowie Leinen, Hanf und Jute bevorzugt. Geeignete Polyamidfasermaterialien sind insbesondere Wolle und andere Tierhaare sowie Seide, von den synthetischen Polyamiden insbesondere Polyamid-6,6, Polyamid-6, Polyamid-11 oder Polyamid-4.

Beispielsweise erhält man mit den erfindungsgemässen Azoverbindungen auf Cellulosefasern nach dem Ausziehverfahren unter Verwendung verschiedenster Alkalizusätze aus langer Flotte Färbungen mit sehr guter Farbausbeute. Mit ebenfalls ausgezeichneten Farbausbeuten färben sie Cellulosefasern nach den bekannten Klotzverfahren, wobei die Verbindung (1) mittels Alkali durch Verweilen bei Raumtemperatur, durch Dämpfen oder mit Trockenhitze fixiert werden kann. Bei den Druckverfahren können ebenfalls die üblichen einphasigen Verfahren in Anwesenheit eines säurebindenden Mittels oder alkalispendenden Mittels, wie beispielsweise Natriumbicarbonat, Natriumcarbonat oder Natriumtrichloracetat, in der Druckpaste mit anschliessendem Fixieren durch Dämpfen, beispielsweise bei 101 bis 103 °C, oder die zweiphasigen Verfahren unter Verwendung neutraler oder schwach saurer Druckpasten, nach deren Druck das Fasermaterial entweder durch ein heisses elektrolythaltiges alkalisches Bad geführt oder aber mit einer alkalischen elektrolythaltigen Klotzflotte überklotzt und der Farbstoff der Formel (1) danach durch Dämpfen oder Trockenhitze fixiert wird, verwendet werden. Man erhält mit diesen Verfahren farbstarke Drucke mit gutem Stand der Konturen und einem klaren Weissfond. Die Qualität der Drucke wird von wechselnden Fixierbedingungen praktisch nicht beeinflusst, und sie zeigen somit eine befriedigende Nuancenkonstanz.

Die erfindungsgemässen Verbindungen zeichnen sich gegenüber den konstitutionell nächst vergleichbaren Farbstoffen der FR-A-2 248 301 durch einen besseren Farbaufbau in Ausziehverfahren aus, auch in Kombination mit anderen faserreaktiven Farbstoffen.

Die mit den Verbindungen der Formel (1) erhaltenen Färbungen oder Drucke auf Cellulosefasermaterialien besitzen beachtliche Echtheiten; hiervon sind insbesondere die wichtigsten Fabrikations- und Gebrauchsechtheiten hervorzuheben, wie die Lichtechtheit, die Waschechtheit bei 60° und 95 °C, die saure und alkalische Walkechtheit, die Wasserechtheit, die Seewasserechtheit, die saure Überfärbeechtheit, die alkalische und saure Schweissechtheit sowie die Plissier-, Bügel- und Reibechtheit.

Sowohl die natürlichen als auch die synthetischen Polyamidfasermaterialien werden mit den neuen Verbindungen der Formel (1) bevorzugt aus saurem, wässrigem Färbebad oder saurer, wässriger Färbeflotte gefärbt. Vorzugsweise wird der gewünschte pH-Wert des Färbebades oder der Färbeflotte mit Essigsäure oder Essigsäure und Ammoniumacetat oder Natriumacetat eingestellt. Um eine gute Egalität der Färbungen zu erreichen oder deren Egalität zu verbessern, ist es vorteilhaft, übliche Galisierhilfsmittel, beispielsweise Verbindungen auf Basis eines Umsetzungsproduktes von einem Fettamin, wie beispielsweise Stearylamin, mit einem Alkylenoxid, wie Äthylenoxid, und/oder eines Umsetzungsproduktes von Cyanurchlorid mit der etwa 3-fach molaren Menge einer Aminobenzolsulfonsäure und/oder einer Aminonaphthalinsulfonsäure, im Färbebad oder der Färbeflotte mitzuverwenden. Die Färbungen können üblicherweise bei Temperaturen von 60 bis 100 °C, vorzugsweise im Ausziehverfahren, insbesondere bei Siedetemperatur des Färbebades oder auch in einem Druckfärbeapparat bei Temperaturen von etwa 110 bis 120 °C ausgeführt werden.

Die nachfolgenden Beispiele dienen zur Erläuterung der Erfindung. Die dort angegebenen Teile sind Gewichtsteile, die Angaben in Prozent beziehen sich auf Gewichtsprozent, sofern nichts anderes vermerkt. Volumenteile verhalten sich zu Gewichtsteilen wie Liter zu Kilogramm.

Beispiel 1

28,1 Teile 4-β-Sulfatoäthylsulfonyl-anilin werden unter Rühren in 300 Teile Wasser eingetragen; 36 Teile 31%ige Salzsäure werden zugegeben und das Ganze auf 5 °C gekühlt. Bei dieser Temperatur lässt man langsam 20 Volumenteile einer wässrigen 5n-Natriumnitritlösung zutropfen und rührt etwa 1 Stunde nach. Überschüssige salpetrige Säure wird mit etwas Amidosulfonsäure zerstört. Sodann werden zur Kupplung 39,6 Teile 2,6-Bis-(β-sulfatoäthylamino)-3-cyan-4-methyl-pyridin, in 200 Teilen Wasser gelöst, zugesetzt und der pH-Wert durch allmähliche Zugabe von Natriumbicarbonat auf 5,5 gestellt. Nach beendigter Kupplung wird die gebildete Azoverbindung mittels Kaliumchlorid; das in einer Menge von 20–25%, bezogen auf das Lösungsvolumen, zugesetzt wird, ausgefällt, abgesaugt und bei 60 °C unter reduziertem Druck getrocknet. Es wird ein gelboranges, salzhaltiges Pulver erhalten, das sich in Wasser mit rotstichig gelber Farbe löst und die Verbindung der Formel

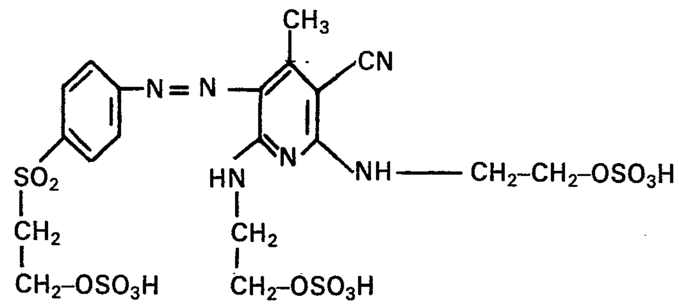

als Alkalimetallsalz, vorwiegend Kaliumsalz, enthält. Sie eignet sich ausgezeichnet zum Färben (einschliesslich Bedrucken) von Baumwolle nach den für faserreaktive Farbstoffe üblichen Applikations- und Fixiermethoden und liefert klare, goldgelbe Färbungen und Drucke mit guten Licht- und Waschechtheiten. Auf Wolle werden ebenfalls sehr gute Färbungen und Drucke erhalten, die sich durch klare, goldgelbe Nuancen von hoher Farbstärke sowie durch sehr gute Licht- und Nassechtheiten auszeichnen.

Beispiel 2

28,1 Teile 4-β-Sulfatoäthylsulfonyl-anilin werden gemäss der in Beispiel 1 beschriebenen Arbeitsweise diazotiert. Nach Zerstören von überschüssiger salpetriger Säure fügt man eine gekühlte, schwach saure Lösung von 23,6 Teilen 2,6-Bis-(β-hydroxyäthylamino)-3-cyan-4-methyl-pyridin in 150 Teilen Wasser hinzu und führt die Kupplung anfangs in stark saurem Bereich, später durch Zugabe von Natriumbicarbonat bei einem pH-Wert von 5,5 durch. Nach beendigter Kupplung wird die bereits eingetretene Fällung der gebildeten Azoverbindung durch Zugabe von etwa 3% Natriumsulfat, bezogen auf das Flüssigkeitsvolumen, vervollständigt. Man isoliert durch Filtration und trocknet das Produkt bei 60 °C unter reduziertem Druck.

Das gelborange Pulver, das neben Elektrolyt das Natriumsalz der Verbindung der Formel

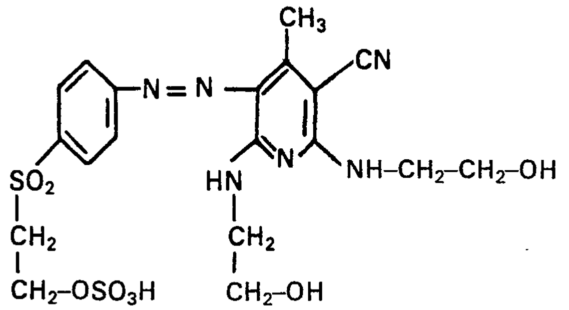

enthält, wird zur Überführung in den Schwefelsäurehalbester in ca. 370 Teile 100%ige Schwefelsäure bei 10 bis 15 °C eingetragen und gelöst und sodann 6 bis 8 Stunden bei 20 bis 25 °C gerührt; anschliessend wird die Lösung vorsichtig auf Eis gegossen und der grösste Teil der Schwefelsäure durch Einstreuen von Calciumcarbonat gebunden. Mit Natriumbicarbonat wird ein pH-Wert zwischen 5,5 und 6,0 eingestellt, das Calciumsulfat abgesaugt, mit warmem Wasser mehrfach gewaschen und die im Filtrat enthaltene veresterte Azoverbindung entweder durch Sprühtrocknen der Lösung isoliert oder daraus mit Kaliumchlorid (in einer Menge von etwa 20%, bezogen auf das Lösungsvolumen) ausgefällt.

Es wird ein gelboranges Pulver erhalten, das neben Elektrolyt das Alkalimetallsalz der im Beispiel 1 formelmässig angegebenen Azoverbindung enthält. Mit ihr werden gleichgute Färbungen und Drucke auf Wolle und Baumwolle erhalten, wie im Beispiel 1 angegeben.

Beispiel 3

36,1 Teile 4-β-Sulfatoäthylsulfonyl-anilin-2-sulfonsäure werden unter Rühren durch Zugabe von Natriumbicarbonat in 200 Teilen warmem Wasser gelöst, 20 Volumenteile einer wässrigen 5n-Natriumnitritlösung werden hinzugegeben und das Ganze auf 200 Teile Eis gegossen. Unter Rühren lässt man sodann 35 Teile 31%ige Salzsäure langsam zufliessen; anschliessend rührt man noch 30 Minuten bei etwa 5 °C nach. Überschüssige salpetrige Säure wird mit etwas Amidosulfonsäure zerstört. Zu dieser Diazoniumsalzlösung gibt man eine schwach saure Lösung von 29,2 Teilen 2,6-Bis-(γ-methoxypropylamino)-3-cyan-4-methyl-pyridin in 120 Teilen Wasser und führt die Kupplung anfangs in stark saurem Bereich, später durch allmähliche Zugabe von Natriumbicarbonat im pH-Bereich zwischen 5 und 6 durch. Nach beendigter Kupplung wird die Azoverbindung durch Zugabe von Natriumchlorid ausgefällt, abgesaugt und getrocknet.

Es wird ein orangerotes Pulver erhalten, das neben Elektrolyt das Natriumsalz der Azoverbindung der Formel

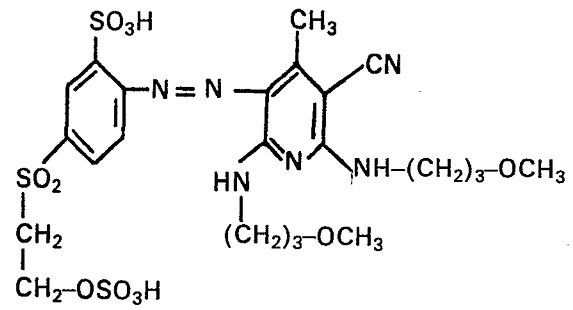

enthält. Sie eignet sich hervorragend als Farbstoff und liefert nach den für faserreaktive Farbstoffe üblichen und bekannten Applikations- und Fixiermethoden auf Baumwolle und Wolle gelbstichig orange Färbungen und Drucke mit sehr guten Licht- und Nassechtheiten.

Beispiel 4

Man verfährt in der im Beispiel 3 angegebenen Verfahrensweise der Diazotierung und Kupplung, setzt jedoch anstelle der dort angegebenen Kupplungskomponente 23,6 Teile 2,6-Bis-(β-hydroxyäthylamino)-3-cyan-4-methyl-pyridin ein. Nach Ausfällung der so hergestellten Azoverbindung mit Natriumchlorid aus dem Kupplungsansatz erhält man ein orangerotes Pulver, das neben Elektrolyt das Natriumsalz der Verbindung der Formel

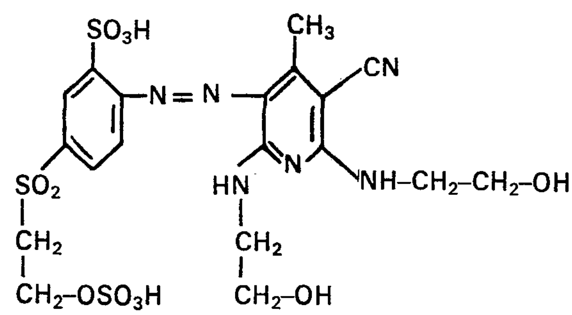

enthält. Dieser eignet sich sehr gut als Farbstoff und liefert nach den für faserreaktive Farbstoffe üblichen Applikations- und Fixiermethoden auf Baumwolle und Wolle klare, gelbstichig orange Färbungen von sehr guter Lichtechtheit und Beständigkeit gegenüber Waschbehandlungen.

Beispiel 5

Die im Beispiel 4 beschriebene Azoverbindung kann man gemäss den Angaben des Beispieles 2 in überschüssiger 100%iger Schwefelsäure verestern. Man erhält auf diese Weise die Verbindung der Formel (in Form der freien Säure geschrieben)

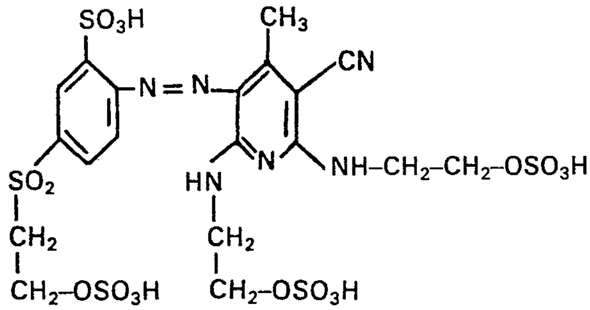

die sich ebenfalls sehr gut als Farbstoff eignet und auf Baumwolle und Wolle klare gelbstichig orange Färbungen mit guten Echtheiten liefert.

Beispiel 6

Man verfährt zur Veresterung der im Beispiel 2 formelmässig angegebenen Verbindung gemäss der im Beispiel 2 angegebenen Verfahrensweise, jedoch mit der Abänderung, dass man entweder die Veresterung nur durch zwei- bis vierstündiges Rühren der Schwefelsäurelösung durchführt oder die Veresterung nur in 180 bis 220 Teilen 100%iger Schwefelsäure oder in 200 bis 250 Teilen 90%iger Schwefelsäure durchführt. Nach Aufarbeitung des Reaktionsgemisches gemäss den Angaben des Beispieles 2 erhält man ein Gemisch von Azoverbindungen, die in der Kupplungskomponente nicht 2 Sulfatogruppen, sondern im Mittel nur eine bis 1,5 Sulfatogruppen in Folge nicht vollständiger Veresterung enthalten.

Dieses Gemisch von Azoverbindungen ist ebenfalls sehr gut als wasserlösliches Farbmittel zum Färben, bevorzugt von Baumwolle aus langer Flotte, geeignet. Dieses Farbstoffgemisch liefert hier kräftige, goldgelbe Färbungen mit guten Licht- und Nassechtheiten.

Beispiel 7

Man verestert die im Beispiel 4 angegebene Azoverbindung gemäss der im Beispiel 6 angegebenen Verfahrensweise zwecks nicht vollständiger Umsetzung der Hydroxygruppen in der Kupplungskomponente mit der Schwefelsäure. Man erhält ein Gemisch von Azoverbindungen aus der im Beispiel 5 formelmässig angegebenen Verbindung und zwei weiteren Azoverbindungen entsprechend der Formel des Beispieles 4, in welcher jedoch eine der beiden Hydroxyäthylamino-Gruppen durch Schwefelsäure verestert ist. Dieses Farbstoffgemisch liefert nach den bekannten und üblichen Applikations- und Fixiermethoden auf Wolle und Baumwolle Färbungen von klaren goldorangen Nuancen, die ein sehr gutes Echtheitsniveau aufweisen.

Beispiel 8

Gemäss der Arbeitsweise des Beispieles 3 diazotiert man 36,1 Teile 4-β-Sulfatoäthylsulfonyl-anilin-2-sulfonsäure und kuppelt mit einer schwefelsauren wässrigen Lösung von 36 Teilen 2-N-n-Butylamino-3-cyan-4-methyl-6-sulfophenylamino-pyridin. Nach Isolierung der so hergestellten Azoverbindung in üblicher Weise und Trocknung wird ein rotes, salzhaltiges Pulver erhalten, das das entsprechende Alkalimetallsalz der Verbindung der Formel

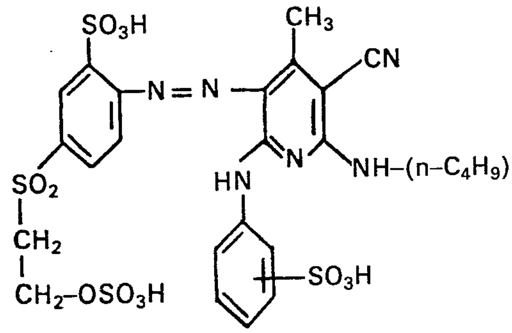

enthält. Es eignet sich sehr gut als Farbstoff und liefert nach den für faserreaktive Farbstoffe üblichen Applikations- und Fixiermethoden auf Baumwolle und Wolle orange Färbungen und Drucke mit sehr guten Echtheiten.

Die Kupplungskomponente kann wie folgt hergestellt werden: 28 Teile 2-N-n-Butylamino-3-cyan-4-methyl-6-phenylaminopyridin rührt man in kleinen Anteilen bei Raumtemperatur in etwa 100 Teile 20%iges Oleum ein und setzt die Rührung etwa 4 Stunden bei 30 bis 35 °C fort. Das Sulfierungsgemisch wird sodann auf etwa 400 Teile Eis gegossen, die Schwefelsäure zum grossen Teil als Calciumsulfat abgeschieden, das abgesaugt und mehrmals mit Wasser gewaschen wird. Das schwach schwefelsaure Filtrat, das die Kupplungskomponente gelöst enthält, wird direkt in die Kupplungsreaktion eingesetzt.

Beispiel 9

33,1 Teile 2-Amino-6-(β-sulfatoäthylsulfonyl)-naphthalin werden in 300 Teilen warmem Wasser mittels Natriumbicarbonat neutral gelöst. 20 Volumenteile einer wässrigen 5n-Natriumnitritlösung werden zugegeben, und das Ganze lässt man langsam innerhalb von etwa 15 Minuten unter Rühren in ein Gemisch aus 200 Teilen Eis und 35 Teilen 31%iger Salzsäure einlaufen. Die Diazotierungsreaktion wird sodann durch einstündiges Nachrühren bei etwa 10 °C vervollständigt. Überschüssige salpetrige Säure wird durch Amidosulfonsäure anschliessend zerstört. Danach setzt man eine schwach saure Lösung von 41,4 Teilen 2,6-Bis-(β-sulfatoäthylamino)-3-carbonamido-4-methyl-pyridin in 100 Teilen Wasser zu und stellt den pH-Wert der Kupplung durch allmähliche Zugabe von Natriumbicarbonat auf 5,5 bis 6,0. Nach beendeter Kupplung wird die gebildete Azoverbindung mittels Kaliumchlorid ausgefällt, abgesaugt und getrocknet. Man erhält ein elektrolythaltiges Pulver, das das Alkalimetallsalz, vorwiegend Kaliumsalz der Verbindung der Formel

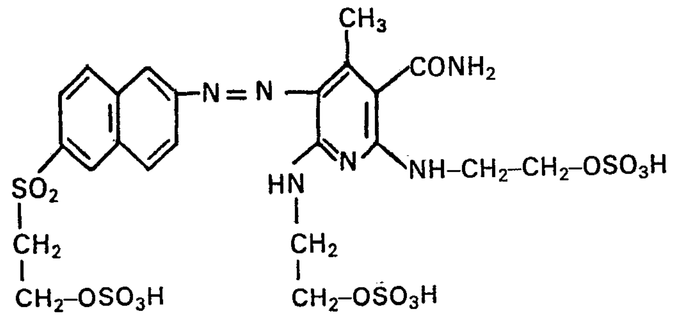

enthält. Dieses ist sehr gut als Farbstoff einsetzbar und liefert beispielsweise auf Wolle nach den üblichen Applikationsverfahren klare goldgelbe Färbungen mit guter Lichtechtheit und guten Nassechtheiten.

Beispiel 10

24 Teile 2-Amino-6-vinylsulfonyl-benzthiazol werden in 140 Volumenteilen 85%iger Phosphorsäure unter Erwärmen gelöst und anschliessend durch Aussenkühlung auf −5 °C abgekühlt. Es werden 6,9 Teile pulverisiertes Natriumnitrit unter Einhaltung der Temperatur von −5 °C eingestreut; die Diazotierung wird durch zweistündiges Nachrühren vervollständigt. Sodann lässt man eine Lösung von 23,6 Teilen 2,6-Bis-(β-hydroxyäthyl-amino)-3-cyan-4-methyl-pyridin in 150 Volumenteilen Methanol langsam bei 0 °C zutropfen; es wird noch eine Stunde bei gleicher Temperatur nachgerührt und der Ansatz sodann auf Eis gegossen. Die ausgefallene Azoverbindung wird abfiltriert, in Wasser angerührt, mit Natriumbicarbonat auf einen pH-Wert von 6 eingestellt, wiederum abgesaugt und getrocknet.

45 Teile der so erhaltenen Azoverbindung werden in 390 Teilen 100%ige Schwefelsäure bei einer Temperatur von 10 bis 15 °C eingetragen; die Lösung wird 6 bis 8 Stunden bei Raumtemperatur gerührt. Sodann giesst man das Gemisch vorsichtig auf Eis, saugt die ausgefallene Verbindung ab, trägt sie in Wasser ein, stellt mit Natriumbicarbonat auf einen pH-Wert von 6, fällt die Azoverbindung wiederum mittels Kaliumchlorid aus, saugt ab und trocknet bei 60 °C unter reduziertem Druck.

Das so erhaltene salzhaltige Pulver enthält das Alkalimetallsalz, vorzugsweise Kaliumsalz, der Verbindung der Formel

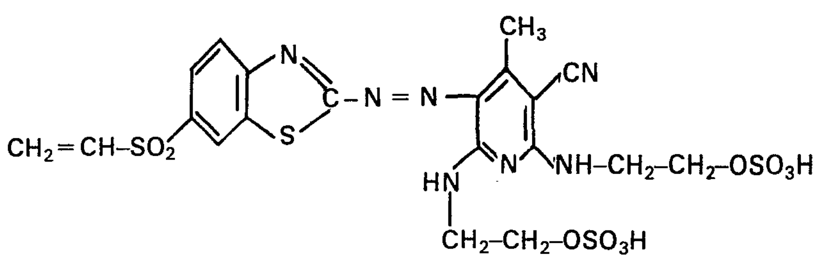

die sich hervorragend als Farbstoff eignet. Sie färbt beispielsweise Wolle nach den für faserreaktive Farbstoffe gebräuchlichen Applikations- und Fixiermethoden in klaren scharlachfarbenen Tönen mit sehr guten Licht- und Nassechtheiten.

Beispiel 11

42 Teile 3-(β-Sulfatoäthylsulfonyl-)-3'-chlor-4'-aminoazobenzol werden in 300 Teilen Wasser mit 20 Volumenteilen einer wässrigen 5n-Natriumnitritlösung versetzt. Diese Mischung gibt man langsam in ein Gemisch aus 200 Teilen Eis und 35 Teilen 31%iger Salzsäure; die Diazotierung wird bei etwa 10 °C unter dreistündigem Rühren vervollständigt. Überschüssige salpetrige Säure zerstört man mit wenig Amidosulfonsäure. Sodann gibt man eine Lösung von 39,6 Teilen 2,6-Bis-(β-sulfatoäthylamino)-3-cyan-4-methylpyridin in 120 Teilen Wasser hinzu; zur Kupplung wird der pH-Wert durch allmähliche Zugabe von Natriumbicarbonat auf 6 gestellt. Man isoliert das Alkalimetallsalz der Verbindung der Formel

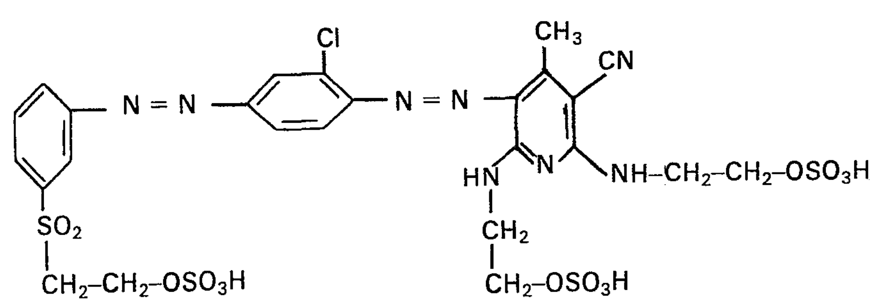

in üblicher Weise durch Sprühtrocknung oder Aussalzen. Diese Verbindung hat sehr gute Farbstoffeigenschaften und ergibt nach den für faserreaktive Farbstoffe üblichen Applikations- und Fixiermethoden auf Baumwolle und Wolle Färbungen und Drucke in gelbstichig roten Nuancen mit guten Echtheiten.

Beispiel 12

59,4 Teile der Aminoazoverbindung der Formel

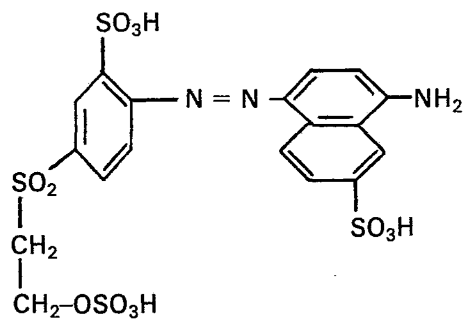

werden nach den Angaben des Beispiels 11 diazotiert und sodann mit einer schwach sauren Lösung von 23,6 Teilen 2,6-Bis-(β-hydroxyäthylamino)-3-cyan-4-methyl-pyridin zur Disazoverbindung gekuppelt. Nach üblicher Aufarbeitung durch Sprühtrocknen oder Aussalzen erhält man das Alkalimetallsatz der Verbindung der Formel

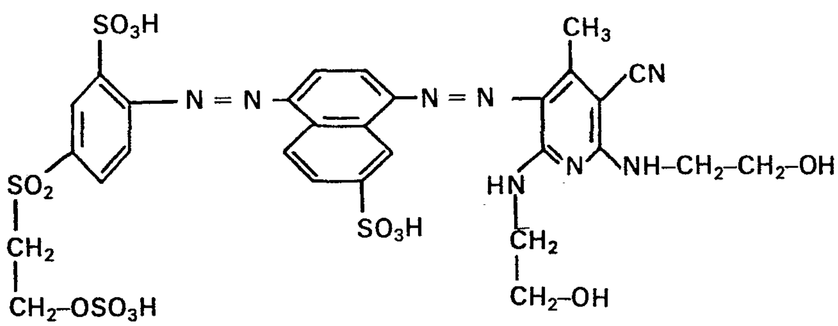

die sehr gute Farbstoffeigenschaften besitzt. Das Farbstoffsalz liefert nach den für faserreaktive Farbstoffe üblichen Anwendungsmethoden auf Baumwolle sehr farbstarke blaustichig violette Färbungen und Drucke, die gute Echtheiten besitzen.

Beispiele 13 bis 144

Die in den nachfolgenden Tabellenbeispielen durch ihre Diazokomponenten gemäss der allgemeinen Formel (2) und Kupplungskomponenten gemäss der allgemeinen Formel (3) charakterisierten erfindungsgemässen Azoverbindungen der allgemeinen Formel (1) lassen sich ebenfalls in erfindungsgemässer Weise, beispielsweise gemäss den Verfahrensweisen der obigen Ausführungsbeispiele, herstellen. Diese faserreaktiven erfindungsgemässen Azoverbindungen zeigen sehr gute Farbstoffeigenschaften mit sehr guten anwendungstechnischen Eigenschaften und liefern Färbungen und Drucke auf den in der Beschreibung genannten Fasermaterialien, insbesondere auf Cellulosefasermaterialien und Wolle, nach den für faserreaktive Farbstoffe üblichen Applikations- und Fixiermethoden mit guten bis sehr guten Echtheiten in den dort angegebenen Farbtönen auf Baumwolle.

(Fortsetzung)

| Bsp. | Verbindung (2) | $R_1$ | $R_2$ | $R_3$ | R | R' | Farbton |
|---|---|---|---|---|---|---|---|
| 13 | 4-β-Sulfatoäthyl-sulfonyl-anilin | H | H | γ-Sulfatopropyl | CN | $CH_3$ | goldgelb |
| 14 | dito | Sulfophenyl | H | γ-(β'-Methoxy-äthoxy)-propyl | CN | $CH_3$ | goldgelb |
| 15 | dito | γ-(β'-Äthoxy-äthoxy)-propyl | H | γ-Sulfatopropyl | $CONH_2$ | $CH_3$ | goldgelb |
| 16 | dito | 3-Methyl-sulfophenyl | H | dito | $CONH_2$ | $CH_3$ | goldgelb |
| 17 | dito | β-Sulfato-β-phenyl-äthyl | H | β-Sulfatoäthyl | CN | $CH_3$ | goldgelb |
| 18 | dito | β-Sulfo-äthyl | H | H | $CONH_2$ | $CH_3$ | goldgelb |
| 19 | dito | Äthyl | H | γ-Sulfatopropyl | CN | $CH_3$ | goldgelb |
| 20 | dito | β-Sulfatoäthyl | $R_2+R_3+N$: | Morpholyl | CN | $CH_3$ | goldgelb |
| 21 | dito | n-Butyl | β-Sulfatoäthyl | wie $R_2$ | $CONH_2$ | $C_2H_5$ | goldgelb |
| 22 | dito | ω-Carboxy-n-pentyl | H | ω-Carboxy-n-pentyl | CN | $CH_3$ | goldgelb |
| 23 | dito | β-Phosphonyläthyl | H | β-(β'-Hydroxy-äthoxy)-äthyl | CN | $CH_3$ | goldgelb |
| 24 | dito | β-Sulfo-äthyl | H | γ-Cyanopropyl | CN | $CH_3$ | goldgelb |
| 25 | dito | Propen(3)-1-yl | H | β-Sulfatoäthyl | CN | $CH_3$ | goldgelb |
| 26 | dito | β-(Sulfophenyl)-äthyl | H | β-(Sulfophenyl)-äthyl | CN | $CH_3$ | goldgelb |
| 27 | 4-β-Phosphatoäthyl-sulfonyl-snilin | β-Phosphatoäthyl | H | β-Phosphatoäthyl | CN | $CH_3$ | goldgelb |
| 28 | 4-Vinylsulfonyl-anilin | β-Sulfatoäthyl | H | β-Sulfatoäthyl | CN | $CH_3$ | goldgelb |
| 29 | 2-Sulfo-4-(β-sulfatoäthyl-sulfonyl)-anilin | β-Methoxy-äthyl | H | β-Methoxy-äthyl | CN | $CH_3$ | orange |
| 30 | 2-Sulfo-4-(β-sulfatoäthyl-sulfonyl)-anilin | β-Methoxy-äthyl | H | γ-Methoxy-propyl | CN | $CH_3$ | orange |
| 31 | dito | β-Phenyläthyl | H | γ-Methoxypropyl | CN | $CH_3$ | orange |
| 32 | dito | β-(Sulfophenyl)-äthyl | H | n-Butyl | CN | $CH_3$ | orange |
| 33 | dito | H | H | H | CN | $CH_3$ | gelbst. orange |
| 34 | dito | H | H | β-(β'-Hydroxyäthoxy)-äthyl | CN | $CH_3$ | orange |
| 35 | dito | H | H | Benzyl | CN | $CH_3$ | orange |
| 36 | dito | H | H | γ-Hydroxypropyl | $CONH_2$ | $CH_3$ | orange |
| 37 | dito | H | H | γ-Isopropoxypropyl | CN | $CH_3$ | orange |
| 38 | dito | H | H | Cyclohexyl | CN | $CN_3$ | orange |
| 39 | dito | H | H | Endomethylen-cyclohexyl | CN | $CH_3$ | orange |
| 40 | dito | H | $R_2+R_3+N$: | Morpholyl | CN | $CH_3$ | orange |
| 41 | dito | β-Hydroxyäthyl | H | γ-Acetylaminopropyl | CN | $CH_3$ | orange |
| 42 | dito | γ-Acetylaminopropyl | H | dito | CN | $CH_3$ | orange |
| 43 | dito | β-Phenyläthyl | H | dito | CN | $CH_3$ | orange |
| 44 | dito | β-(β'-Hydroxyäthoxy)-äthyl | H | β-(β'-Hydroxyäthoxy)-äthyl | CN | $CH_3$ orange | |
| 45 | dito | 3-Methyl-phenyl | H | dito | CN | $CH_3$ | orange |

(Fortsetzung)

| Bsp. | Verbindung (2) | $R_1$ | $R_2$ | $R_3$ | R | R' | Farbton |
|---|---|---|---|---|---|---|---|
| 46 | dito | β-(β'-Hydroxyäthoxy)-äthyl | H | H | CN | $CH_3$ | goldorange |
| 47 | dito | β-Hydroxyäthyl | H | γ-(β'-Phenoxyäthoxy)-propyl | CN | $CH_3$ | orange |
| 48 | 2-Sulfo-4-(β-sulfato-äthyl-sulfonyl)-anilin | H | H | γ-(δ'-Hydroxy-n-butoxy)-propyl | CN | $CH_3$ | goldorange |
| 49 | dito | H | n-Butyl | n-Butyl | CN | $CH_3$ | goldorange |
| 50 | dito | Äthyl | H | Propen(3)-1-yl | CN | $CH_3$ | orange |
| 51 | dito | Äthyl | H | β-Chloräthyl | CN | $CH_3$ | orange |
| 52 | dito | β-(β'-Hydroxyäthoxy)-äthyl | H | Cyclohexyl | $CONH_2$ | $CH_3$ | orange |
| 53 | dito | Endomethylencyclohexyl | H | γ-(β'-Äthoxyäthoxy)-propyl | CN | $CH_3$ | orange |
| 54 | dito | γ-Äthoxypropyl | H | γ-Äthoxypropyl | CN | $CH_3$ | orange |
| 55 | dito | γ-(β)-'-Hydroxy-äthoxy)-propyl | H | γ-(β'-Hydroxy-äthoxy)-propyl | CN | $CH_3$ | orange |
| 56 | dito | γ-(β'-Äthoxyäthoxy)-propyl | H | γ-(β'-Äthoxyäthoxy)-propyl | CN | $CH_3$ | orange |
| 57 | dito | γ-Isopropoxypropyl | H | γ-Isopropoxypropyl | CN | $CH_3$ | orange |
| 58 | dito | γ-Butoxy-propyl | H | γ-Butoxy-propyl | CN | $CH_3$ | orange |
| 59 | dito | γ-(δ'-Hydroxy-n-butoxy)-propyl | H | γ-(δ'-Hydroxy-n-butoxy)-propyl | CN | $CH_3$ | orange |
| 60 | dito | n-Butyl | H | n-Butyl | $CONH_2$ | $CH_3$ | orange |
| 61 | dito | 3-Acetylamino-phenyl | β-Hydroxyäthyl | wie $R_2$ | CN | $CH_3$ | orange |
| 62 | dito | H | Methyl | β-Hydroxyäthyl | CN | $CH_3$ | goldorange |
| 63 | dito | β-Hydroxyäthyl- | Methyl | β-Hydroxyäthyl | CN | $CH_3$ | orange |
| 64 | dito | Propen(3)-1-yl | H | Propen(3)-1-yl | CN | $CH_3$ | goldorange |
| 65 | dito | H | Methyl | β-Hydroxyäthyl | $CONH_2$ | $CH_3$ | goldorange |
| 66 | 2-Sulfo-4-(β-sulfato-äthylsulfonyl)-anilin | Isopropyl | H | Isopropyl | $CONH_2$ | $C_2H_5$ | goldorange |
| 67 | dito | H | H | γ-Methoxy-propyl | CN | $C_2H_5$ | goldorange |
| 68 | dito | H | H | p-Methoxyphenyl | CN | $CH_3$ | orange |
| 69 | dito | n-Hexyl | H | n-Hexyl | $CONH_2$ | $CH_3$ | orange |
| 70 | dito | Sulfo | H | Benzyl | CN | $CH_3$ | goldgelb |
| 71 | dito | 3-Methoxysulfophenyl | n-Butyl | n-Butyl | CN | $CH_3$ | orange |
| 72 | dito | ω-Carboxy-n-pentyl | H | γ-Methoxy-propyl | CN | $CH_3$ | orange |
| 73 | dito | p-Methylphenyl | H | β-Sulfatoäthyl | CN | $CH_3$ | orange |
| 74 | dito | γ-Acetoxy-propyl | H | γ-Acetoxy-propyl | CN | $CH_3$ | orange |
| 75 | dito | β-(Sulfophenyl)-äthyl | H | β-Methoxyäthyl | CN | $CH_3$ | orange |
| 76 | dito | dito | H | β-(Sulfophenyl)-äthyl | CN | $CH_3$ | orange |
| 77 | 3-β-Sulfatoäthyl-sulfonyl-anilin | β-Sulfatoäthyl | H | β-Sulfatoäthyl | CN | $CH_3$ | rotst. gelb |

(Fortsetzung)

| Bsp. | Verbindung (2) | $R_1$ | $R_2$ | $R_3$ | R | R′ | Farbton |
|---|---|---|---|---|---|---|---|
| 78 | dito | γ-Methoxy-propyl | H | β-Sulfatoäthyl | CN | $CH_3$ | rotst. gelb |
| 79 | dito | γ-Sulfatopropyl | $R_2 + R_3 +$ N: | Morpholyl | CN | $CH_3$ | rotst. gelb |
| 80 | dito | Sulfophenyl | H | β-(β′-Äthoxy-äthoxy)-äthyl | CN | $CH_3$ | gelbst. orange |
| 81 | dito | H | H | γ-Sulfatopropyl | CN | $CH_3$ | rotst. gelb |
| 82 | dito | β-Sulfatoäthyl | H | γ-(β′-Äthoxy-äthoxy)-propyl | CN | $CH_3$ | rotst. gelb |
| 83 | dito | β-Sulfato-β-phenyl-äthyl | H | β-Sulfatoäthyl | CN | $CH_3$ | rotst. gelb |
| 84 | 3-β-Sulfatoäthyl-sulfonyl-anilin | β-(Sulfophenyl)-äthyl | n-Butyl | n-Butyl | CN | $C_2H_5$ | rotst. gelb |
| 85 | dito | Sulfo | H | β-Methoxyäthyl | CN | $CH_3$ | rotst. gelb |
| 86 | dito | Propen(3)-1-yl | H | γ-Sulfatopropyl | CN | $CH_3$ | rotst. gelb |
| 87 | dito | γ-Sulfatopropyl | H | γ-Acetylamino-propyl | CN | $CH_3$ | rotst. gelb |
| 88 | dito | β-(Sulfophenyl)-äthyl | H | β-Sulfophenyl)-äthyl | CN | $CH_3$ | rotst. gelb |
| 89 | 2-Methoxy-5-β-sulfato-äthylsulfonyl-anilin | β-Sulfatoäthyl | H | β-Sulfatoäthyl | CN | $CH_3$ | klares rotst. Gelb |
| 90 | dito | 3-Methyl-sulfophenyl | H | dito | CN | $CH_3$ | dito |
| 91 | dito | β-Sulfatoäthyl | H | γ-(β′-Äthoxy-äthoxy)-propyl | CN | $CH_3$ | goldgelb |
| 92 | dito | β-(Sulfophenyl)-äthyl | H | γ-Sulfatopropyl | CN | $CH_3$ | goldgelb |
| 93 | dito | H | H | β-Sulfatoäthyl | CN | $CH_3$ | rotst. gelb |
| 94 | 2,5-Dimethoxy-4-β-sulfatoäthylsulfonyl-anilin | β-Sulfatoäthyl | H | dito | CN | $CH_3$ | goldgelb |
| 95 | dito | γ-Sulfatopropyl | H | γ-(β′-Äthoxyäthoxy)-propyl | CN | $CH_3$ | goldgelb |
| 96 | dito | β-(Sulfophenyl)-äthyl | H | γ-Sulfatopropyl | CN | $CH_3$ | goldgelb |
| 97 | dito | H | H | β-Sulfatoäthyl | CN | $CH_3$ | goldgelb |
| 98 | 2-Methoxy-5-methyl-4-β-sulfatoäthylsulfonyl-anilin | β-Sulfatoäthyl | H | dito | CN | $CH_3$ | goldgelb |
| 99 | 2-Methoxy-5-methyl-4-β-sulfatoäthylsulfonyl-anilin | H | H | γ-Sulfatopropyl | CN | $CH_3$ | goldgelb |
| 100 | dito | β-(Sulfophenyl)-äthyl | H | β-Sulfatoäthyl | CN | $CH_3$ | goldgelb |
| 101 | 4-Methoxy-5-β-sulfato-äthylsulfonyl-anilin | β-Sulfatoäthyl | H | β-Sulfatoäthyl | CN | $CH_3$ | rotst. gelb |
| 102 | dito | H | H | γ-Sulfatopropyl | CN | $CH_3$ | rotst.gelb |
| 103 | dito | 3-Methoxysulfophenyl | H | γ-Sulfatopropyl | CN | $CH_3$ | rotst. gelb |
| 104 | dito | β-Sulfatoäthyl | H | β-(Sulfophenyl)-äthyl | CN | $CH_3$ | rotst. gelb |
| 105 | 6-β-Sulfatoäthyl-sulfonyl-2-aminonaphthalin | γ-Sulfatopropyl | H | γ-Sulfatopropyl | CN | $CH_3$ | klares rotst. Gelb |
| 106 | dito | Sulfo | H | β-Sulfatoäthyl | CN | $CH_3$ | dito |
| 107 | dito | β-Sulfatoäthyl | H | β-(Sulfophenyl)-äthyl | CN | $CH_3$ | dito |

(Fortsetzung)

| Bsp. | Verbindung (2) | $R_1$ | $R_2$ | $R_3$ | R | R′ | Farbton |
|---|---|---|---|---|---|---|---|
| 108 | 6-β-Sulfatoäthylsulfonyl-2-amino-naphthalin-1-sulfonsäure | H | H | β-Sulfatoäthyl | CN | $CH_3$ | goldgelb |
| 109 | dito | β-(β′-Hydroxyäthoxy)-äthyl | H | β-(β′-Hydroxyäthoxy)-äthyl | CN | $CH_3$ | goldorange |
| 110 | dito | γ-Acetylaminopropyl | H | γ-Acetylaminopropyl | CN | $CH_3$ | goldorange |
| 111 | dito | β-Sulfatoäthyl | H | β-Sulfatoäthyl | CN | $CH_3$ | goldorange |
| 112 | dito | β-(Sulfophenyl)-äthyl | H | γ-Sulfatopropyl | CN | $CH_3$ | goldorange |
| 113 | 8-β-Sulfatoäthylsulfonyl-2-aminonaphthalin | β-Sulfatoäthyl | H | β-Sulfatoäthyl | CN | $CH_3$ | goldgelb |
| 114 | dito | β-Sulfato-β-phenyl-äthyl | H | γ-Sulfatopropyl | CN | $CH_3$ | goldgelb |
| 115 | dito | ω-Carboxy-n-pentyl | H | β-Sulfatoäthyl | CN | $CH_3$ | goldgelb |
| 116 | dito | β-(Sulfophenyl)-äthyl | H | β-(Sulfophenyl)-äthyl | $CONH_2$ | $n\text{-}C_4H_9$ | goldgelb |
| 117 | 6-Sulfo-8-β-sulfato-äthylsulfonyl-2-aminonaphthalin | H | H | β-Sulfatoäthyl | CN | $CH_3$ | goldgelb |
| 118 | dito | H | H | H | CN | $CH_3$ | goldgelb |
| 119 | dito | β-(Sulfophenyl)-äthyl | H | H | CN | $CH_3$ | goldgelb |
| 120 | dito | γ-Acetylamino-propyl | H | γ-Acetylamino-propyl | CN | $CH_3$ | goldgelb |
| 121 | dito | γ-Hydroxypropyl | H | γ-Hydroxypropyl | CN | $CH_3$ | goldgelb |
| 122 | dito | β-(β′-Hydroxyäthoxy)-äthyl | H | β-(β′-Hydroxyäthoxy)-äthyl | $CONH_2$ | $C_2H_5$ | goldgelb |
| 123 | dito | Sulfobenzyl | H | γ-Sulfatoäthyl | CN | $C_2H_5$ | goldgelb |
| 124 | dito | β-(β′-Hydroxyäthoxy)-äthyl | $R_2 + R_3 + N$: | Morpholyl | CN | $CH_3$ | goldgelb |
| 125 | 6-β-Sulfato-äthylsulfonyl-2-amino-benzthiazol | H | H | β-Sulfatopropyl | CN | $CH_3$ | rotorange (auf Wolle) |
| 126 | dito | β-(Sulfophenyl)-äthyl | H | β-Sulfatoäthyl | CN | $CH_3$ | dito |
| 127 | 4′-(β-Sulfatoäthyl-sulfonyl)-2,5-dimethyl-4-aminoazobenzol | β-Sulfatoäthyl | H | β-Sulfatoäthyl | CN | $CH_3$ | braunst. rot |
| 128 | 3′-(β-Sulfatoäthylsul-fonyl)-4-aminoazobenzol | γ-Sulfatopropyl | H | γ-Sulfatopropyl | CN | $CH_3$ | gelbst. rot |
| 129 | 2-Brom-4-β-sulfato-äthylsulfonyl-anilin | β-Sulfatoäthyl | H | γ-Sulfatopropyl | CN | $CH_3$ | goldorange |
| 130 | 4′-(β-Sulfatoäthylsul-fonyl)-3-sulfo-4-aminoazobenzol | γ-Sulfatopropyl | H | γ-(β′-Methoxy-äthoxy)-propyl | CN | $CH_3$ | blaust. rot |
| 131 | dito | β-Sulfatoäthyl | H | β-Sulfatoäthyl | CN | $CH_3$ | blaust. rot |

(Fortsetzung)

| Bsp. | Verbindung (2) | $R_1$ | $R_2$ | $R_3$ | R | R' | Farbton |
|---|---|---|---|---|---|---|---|
| 132 | 4-Amino-(6,7)-sulfo-1-[4'-(β-sulfatoäthylsulfonyl)-phenylazo]-naphthalin | γ-Sulfatopropyl | H | γ-Methoxypropyl | CN | $CH_3$ | rotviolett |
| 133 | dito | β-Methoxyäthyl | H | β-(Sulfophenyl)-äthyl | CN | $CH_3$ | rotviolett |
| 134 | dito | H | H | β-Sulfatoäthyl | CN | $CH_3$ | rotviolett |
| 135 | 4-Amino-(6,7)-sulfo-1-[2'-sulfo-4'-(β-sulfatoäthylsulfonyl)-phenylazo]-naphthalin | H | H | H | CN | $CH_3$ | violett |
| 136 | dito | β-(β'-Hydroxy-äthoxy)-äthyl | H | β-(β'-Hydroxy-äthoxy)-äthyl | CN | $CH_3$ | blaust. violett |
| 137 | 2-Sulfo-5-vinyl-sulfonylanilin | β-Hydroxyäthyl | H | β-Hydroxyäthyl | CN | $CH_3$ | goldgelb |
| 138 | dito | γ-Methoxy-propyl | H | γ-Methoxy-propyl | CN | $CH_3$ | goldorange |
| 139 | dito | Sulfophenyl | H | n-Propyl | CN | $CH_3$ | goldorange |
| 140 | dito | β-Methoxyäthyl | H | β-(Sulfophenyl)-äthyl | CN | $CH_3$ | goldorange |
| 141 | 4-β-Sulfatoäthylsulfonyl-anilin | γ-Sulfatopropyl | H | γ-Sulfatopropyl | CN | $CH_3$ | goldgelb |
| 142 | dito | dito | H | γ-Methoxypropyl | CN | $CH_3$ | goldgelb |
| 143 | dito | γ-Methoxypropyl | H | β-Sulfatoäthyl | CN | $CH_3$ | goldgelb |
| 144 | dito | β-(Sulfophenyl)-äthyl | H | β-Sulfatoäthyl | CN | $CH_3$ | goldgelb |
| 145 | 4-ω-(β-Sulfatoäthyl-sulfonyl)-tolylamin | β-Sulfatoäthyl | H | β-Sulfatoäthyl | CN | $CH_3$ | goldgelb |
| 146 | dito | γ-Methoxypropyl | H | β-Sulfatoäthyl | CN | $CH_3$ | goldgelb |
| 147 | 3-ω-(β-Sulfatoäthyl-sulfonyl)-tolylamin | γ-Sulfatopropyl | H | γ-Sulfatopropyl | CN | $CH_3$ | goldgelb |
| 148 | 6-Methoxy-3-ω-(β-sulfatoäthylsulfonyl)-tolylamin | γ-Acetylaminopropyl | H | γ-Sulfatopropyl | CN | $CH_3$ | goldgelb |
| 149 | 4-Methoxy-3-ω-(β-sulfatoäthylsulfonyl)-tolylamin | β-Sulfatoäthyl | H | β-Sulfatoäthyl | CN | $CH_3$ | goldgelb |
| 150 | 4-Methyl-3,5-bis-(β-sulfatoäthylsulfonylmethylen)-anilin | γ-Methoxypropyl | H | β-Sulfatoäthyl | CN | $CH_3$ | goldgelb |
| 151 | 4-ω-(β-Sulfatoäthyl-sulfonyl)-äthyl-anilin | γ-Sulfatopropyl | H | γ-Sulfatopropyl | CN | $CH_3$ | goldgelb |
| 152 | 3-ω-(β-Sulfatoäthyl-sulfonyl)-äthyl-anilin | β-Sulfatoäthyl | H | β-Sulfatoäthyl | CN | $CH_3$ | goldgelb |

(Fortsetzung)

| Bsp. | Verbindung (2) | $R_1$ | $R_2$ | $R_3$ | R | R' | Farbton |
|---|---|---|---|---|---|---|---|
| 153 | 5-(β-Sulfatoäthyl-sulfonyl-methylen)-1-naphthyl-amin | β-Sulfatoäthyl | H | β-Sulfatoäthyl | CN | $CH_3$ | goldgelb |
| 154 | 3-Carboxy-4-amino-1-[1'-sulfo-6'-(β-sulfato-äthyl-sulfonyl)-2'-naphthylazo]-benzol | β-Sulfatoäthyl | H | β-Sulfatoäthyl | CN | $CH_3$ | blaustichig violett |
| 155 | 4-Amino-(6,7)-sulfo-1-[6'-sulfo-8'-(β-sulfato-äthylsulfonyl)-1'-naphthylazo]-naphthalin | β-Sulfatoäthyl | H | β-Sulfatoäthyl | CN | $CH_3$ | marineblau |

**Patentansprüche**

1. Wasserlösliche Azoverbindungen, die die allgemeine Formel (1)

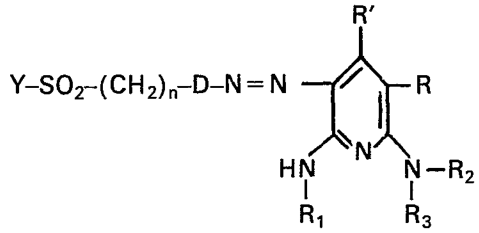

(1)

besitzen, in welcher bedeuten:

Y ist die Vinylgruppe oder eine Gruppe der Formel $-CH_2-CH_2-Z$, in welcher Z einen anorganischen oder organischen, alkalisch eliminierbaren Rest oder eine Hydroxygruppe bedeutet:

n steht für die Zahl Null, 1 oder 2;

D ist der Phenylen- oder Naphthylenrest, der durch 1 oder 2 Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Chlor, Brom, Fluor und Carboxy und/oder durch 1 Nitrogruppe und/oder durch 1 Sulfogruppe substituiert sein kann, oder

ist der bivalente Phenylazophenyl-, Phenylazonaphthyl-, Naphthylazophenyl- oder Naphthylazonaphthyl-Rest, in welchen jeder Phenyl- und Naphthylrest durch 1 oder 2 Substituenten aus der Gruppe niederes Alkyl, niederes Alkoxy, Hydroxy, Chlor, Brom und Fluor und/oder durch eine niedere Alkanoylamino-, Sulfo- oder Carboxygruppe substituiert sein kann, oder

ist der Benzthiazol-2-yl-Rest, der im Benzolkern durch einen Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Nitro, Chlor, Brom, Fluor und Sulfo substituiert sein kann;

R ist ein Wasserstoffatom, bevorzugt jedoch eine Cyan-, niedere Carbalkoxy-, Carbophenoxy-, Carbamoyl-, eine durch niederes Alkyl und/oder Phenyl mono- oder disubstituierte Carbamoyl-, eine niedere Alkylsulfonyl- oder eine Arylsulfonylgruppe;

R' ist ein Wasserstoffatom oder eine niedere Alkenylgruppe oder eine gegebenenfalls substituierte niedere Alkylgruppe oder eine Cycloalkylgruppe oder ein Arylrest;

$R_1$ ist ein Wasserstoffatom, eine Sulfonsäuregruppe oder eine niedere Alkenylgruppe, eine gegebenenfalls substituierte niedere Alkylgruppe, eine Cycloalkylgruppe, ein Arylrest oder ein gesättigter, ungesättigter oder aromatischer heterocyclischer Rest;

$R_2$ ist ein Wasserstoffatom, eine niedere Alkenylgruppe oder eine gegebenenfalls substituierte Alkylgruppe;

$R_3$ ist ein Wasserstoffatom, eine Sulfonsäuregruppe oder eine niedere Alkenylgruppe, eine gegebenenfalls substituierte niedere Alkylgruppe, eine Cycloalkylgruppe, ein Arylrest oder ein gesättigter, ungesättigter oder aromatischer heterocyclischer Rest, oder

$R_2$ und $R_3$ bilden zusammen mit dem Stickstoffatom einen gegebenenfalls ein weiteres Heteroatom enthaltenden heterocyclischen gesättigten oder ungesättigten Ring, wobei $R_1$, $R_2$ und $R_3$ zueinander gleiche oder voneinander verschiedene Bedeutungen besitzen können und wobei die Verbindungen (1) neben der gegebenenfalls wasserlöslich machenden Abgangsgruppe Z zwingend mindestens eine Sulfonsäure-, Phosphonsäure-, Phosphato- oder Sulfatogruppe oder zwei Carboxygruppen enthalten.

2. Verfahren zur Herstellung der in Anspruch 1 genannten und definierten Verbindungen der Formel (1), dadurch gekennzeichnet, dass man eine Verbindung der allgemeinen Formel (2)

$$Y-SO_2-(CH_2)_n-D-NH_2 \quad (2)$$

in welcher D, n und Y die in Anspruch 1 genannten Bedeutungen haben, diazotiert und mit einer Kupplungskomponente der allgemeinen Formel (3)

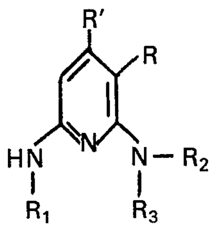

(3)

in welcher R, R', $R_1$, $R_2$ und $R_3$ die in Anspruch 1 genannten Bedeutungen haben, kuppelt und gegebenenfalls im Falle, dass Y für die β-Hydroxyäthyl-Gruppe steht und/oder eine oder beide oder drei der Formelglieder $R_1$, $R_2$ und $R_3$ eine durch Hydroxy oder niederes Hydroxyalkoxy substituierte Alkylgruppe darstellen, diese β-Hydroxyäthylgruppe des Formelgliedes Y und eine oder mehrere dieser Hydroxygruppen in $R_1$, $R_2$ und $R_3$ mittels eines Sulfatierungsmittels oder eines Phosphatierungsmittels in die entsprechenden Sulfato- bzw. Phosphatoderivate überführt, wobei bei dieser Diazotierungs- und Kupplungsreaktion die beiden Reaktionskomponenten so ausgewählt werden, dass mindestens eine von ihnen mindestens eine der obengenannten wasserlöslich machenden Gruppen neben der gegebenenfalls wasserlöslich machenden faserreaktiven Gruppe (entsprechend Y) enthält oder eine sulfatier- oder phosphatierbare Hydroxygruppe enthält, die anschliessend mit einem Sulfatierungs- bzw. Phosphatierungsmittel verestert werden kann.

3. Verfahren zur Herstellung von Verbindungen der allgemeinen Formel (1) von Anspruch 1, in welcher die Formelglieder R, R', $R_1$ und/oder $R_3$ einen Arylrest bedeuten und/oder eine Gruppe bedeuten, die einen Arylrest enthält und ein oder zwei dieser Arylreste eine oder zwei Sulfogruppen besitzen und/oder diese Formelglieder eine Sulfatoalkylgruppe enthalten und/oder eine Sulfatoalkylgruppe bedeuten, dadurch gekennzeichnet, dass man eine Azoverbindung, die der allgemeinen Formel (1) entspricht, in welcher jedoch die Formelglieder R, R', $R_1$ und/oder $R_3$ einen Arylrest bedeuten und/oder enthalten, die keine oder insgesamt nur eine Sulfogruppe besitzen, und/oder eines oder mehrere dieser Formelglieder eine der obengenannten Alkylgruppen besitzt, die durch Hydroxy substituiert sind, mit einem Sulfierungsmittel umsetzt und hierbei eine oder zwei Sulfogruppen in den oder die Arylreste einführt und/oder die Hydroxygruppe(n) zur Sulfatogruppe(n) verestert.

4. Verfahren nach Anspruch 3, dadurch gekennzeichnet, dass man von einer Azoverbindung der allgemeinen Formel (1) wie in Anspruch 3 definiert ausgeht, in welcher Y für die β-Hydroxyäthylgruppe steht und die Gruppe gleichzeitig in die β-Sulfatoäthylgruppe überführt.

5. Verbindung nach Anspruch 1 der Formel

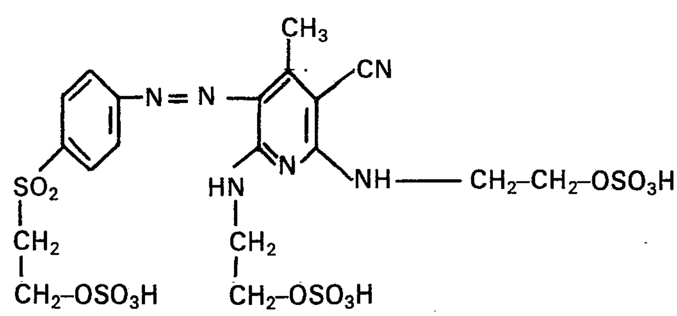

in Form der Säure oder in Form eines Salzes.

6. Verbindung nach Anspruch 1 der Formel

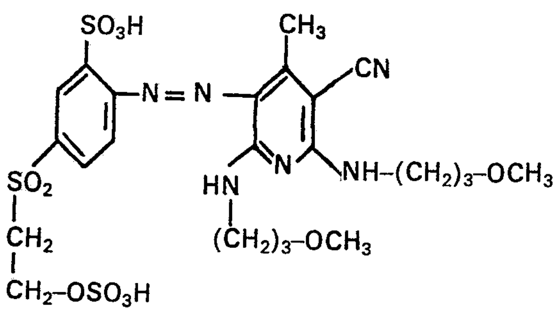

oder ein Salz dieser Verbindung.

7. Verbindung nach Anspruch 1 der Formel

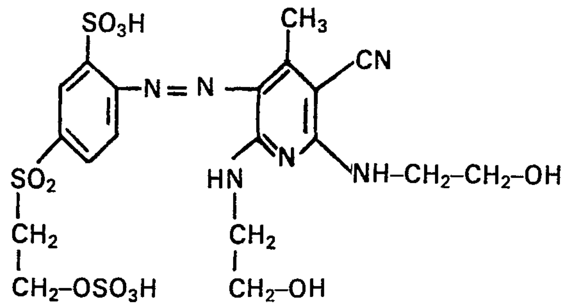

in Form der Säure oder in Form eines Salzes.

8. Verbindung nach Anspruch 1 der Formel

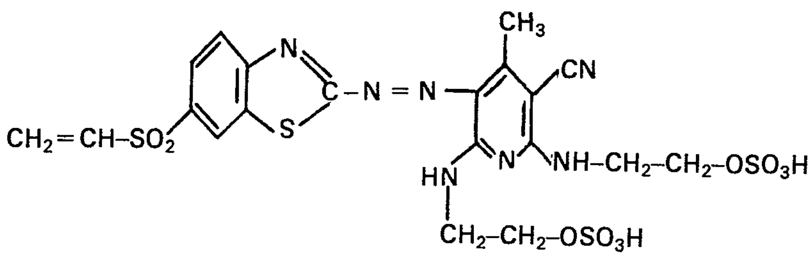

in Form der Säure oder in Form eines Salzes.

9. Verwendung der Verbindungen von Anspruch 1 als Farbstoffe.

10. Verwendung nach Anspruch 9 zum Färben oder Bedrucken von Cellulosefasern, natürlichen oder synthetischen Polyamidfasern oder von Leder.

**Revendications**

1. Composés azoïques solubles dans l'eau qui répondent à la formule générale (1):

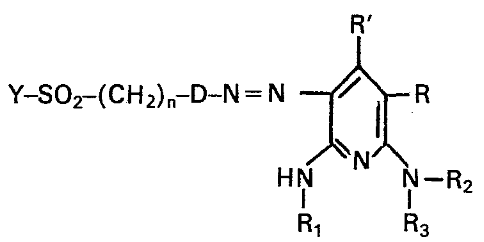

(1)

dans laquelle:

Y représente un radical vinyle ou un radical $-CH_2-CH_2-Z$ dans lequel Z désigne un radical minéral ou organique pouvant être éliminé en milieu alcalin ou un radical hydroxy;

n désigne un nombre égal à 0, à 1 ou à 2,

D représente:

– un radical phénylène ou naphtylène qui peut porter 1 ou 2 substituants pris dans l'ensemble constitué par les alkyles inférieurs, les alcoxy inférieurs, le radical hydroxy, les alcanoylamino inférieurs, le radical benzoylamino, les benzoylamino porteurs d'un alkyle inférieur, d'un alcoxy inférieur, d'un atome de chlore et/ou d'un sulfo, le chlore, le brome, le fluor et le radical carboxy, et/ou 1 radical nitro et/ou 1 radical sulfo, ou

– l'un des radicaux bivalents phénylazophényles, phénylazonaphtyles, naphtylazophényles et naphtylazonaphtyles dans lesquels chaque radical phényle ou naphtyle peut porter 1 ou 2 substituants pris dans l'ensemble constitué par les alkyles inférieurs, les alcoxy inférieurs, le radical hydroxy, le chlore, le brome et le fluor et/ou 1 radical alcanoylamino inférieur, sulfo ou carboxy, ou

– un radical benzothiazolyle-2 qui peut porter, sur son noyau benzénique, un substituant pris dans l'ensemble constitué par les alkyles inférieurs, les alcoxy inférieurs, le radical hydroxy, les alcanoylamino inférieurs, le radical benzoylamino, les benzoylamino porteurs d'un alkyle inférieur, d'un alcoxy inférieur, d'un atome de chlore et/ou d'un radical sulfo, le radical nitro, le chlore, le brome, le fluor et le radical sulfo,

R représente un atome d'hydrogène mais de préférence un cyano, un alcoxycarbonyle inférieur, un phénoxycarbonyle, un carbamoyle, un carbamoyle porteur d'un ou deux substituants pris dans l'ensemble constitué par les alkyles inférieurs et le radical phényle, un alkylsulfonyle inférieur ou un arylsulfonyle,

R' représente un atome d'hydrogène, un alcényle inférieur, un alkyle inférieur éventuellement substitué, un cycloalkyle ou un aryle,

$R_1$ représente un atome d'hydrogène, un radical sulfo, un alcényle inférieur, un alkyle inférieur éventuellement substitué, un cycloalkyle, un aryle ou un radical hétérocyclique saturé, insaturé ou aromatique,

$R_2$ représente un atome d'hydrogène, un alcényle inférieur ou un alkyle éventuellement substitué,

$R_3$ représente un atome d'hydrogéne, un radical sulfo, un alcényle inférieur, un alkyle inférieur éventuellement substitué, un cycloalkyle, un aryle ou un radical hétérocyclique saturé, insaturé, ou aromatique, ou encore

$R_2$ et $R_3$ forment ensemble et avec l'atome d'azote un noyau héterocyclique, saturé ou insaturé, contenant éventuellement un hétéroatome supplémentaire, les radicaux $R_1$, $R_2$ et $R_3$ pouvant être identiques les uns aux autres ou différents les uns des autres et les composés (1) contenant, en plus du radical éliminable Z éventuellement hydrosolubilisant, obligatoirement au moins un radical sulfo, phosphono, phosphato ou sulfato ou deux radicaux carboxy.

2. Procédé de préparation des composés de formule (1) mentionnés et définis à la revendication 1, procédé caractérisé en ce qu'on diazote un composé répondant à la formule générale (2):

$$Y{-}SO_2{-}(CH_2)_n{-}D{-}NH_2 \qquad (2)$$

dans laquelle D, n et Y ont les significations données à la revendication 1, on copule le diazoïque avec un copulant répondant à la formule générale (3):

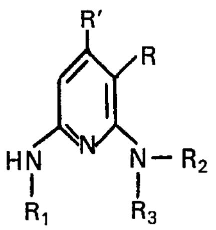

(3)

dans laquelle R, R', $R_1$, $R_2$ et $R_3$ ont les significations données à la revendication 1, et éventuellement, dans le cas où Y représente un radical hydroxy-2 éthyle et/ou un, deux ou trois des radicaus $R_1$, $R_2$ et $R_3$ représentent un radical alkyle porteur d'un hydroxy ou d'un hydroxyalcoxy inférieur, on transforme ce radical hydroxy-2 éthyle de Y ou un ou plusieurs de ces radicaus hydroxy présents dans $R_1$, $R_2$ et $R_3$, au moyen d'un agent de sulfatation ou d'un agent de phosphatation, en les dérivés sulfatés ou phosphatés correspondants, les deux composantes réactionnelles mises en jeu dans ces réactions de diazotation et de copulation étant choisies de telle façon qu'au moins l'une d'entre elles contienne au moins un des radicaux hydrosolubilisants mentionnés ci-dessus en plus du radical capable de réagir avec les fibres (correspondant à Y) et éventuellement hydrosolubilisant, ou un radical hydroxy sulfatable ou phosphatable qui puisse ensuite être estérifié par un agent de sulfatation ou de phosphatation.

3. Procédé de préparation de composés de formule générale (1) selon la revendication 1 dans lesquels les radicaux R, R', $R_1$ et/ou $R_3$ représentent un groupe aryle et/ou contiennent un groupe contenant un groupe aryle, et un ou deux de ces groupes aryles portent un ou deux groupes sulfo, et/ou ces radicaux contiennent un groupe sulfatoalkyle ou représentent un groupe sulfatoalkyle, procédé caractérisé en ce qu'on fait réagir avec un agent de sulfonation un composé azoïque répondant à la formule générale (1) mais dans laquelle les radicaux R, R', $R_1$ et/ou $R_3$ représentent et/ou contiennent un groupe aryle dépourvu de groupe sulfo ou n'en contenant au total qu'un, et/ou un ou plusieurs de ces radicaux contiennent un des groupes alkyles mentionnés ci-dessus qui portent un groupe hydroxy, et ainsi on introduit un ou deux groupes sulfo dans le ou les groupes aryle et/ou on estérifie le ou les groupes hydroxy en groupe(s) sulfato.

4. Procédé selon la revendication 3 caractérisé en ce qu'on part d'un composé azoïque de formule générale (1) tel que défini à la revendication 3 et dans lequel Y représente un radical hydroxy-2 éthyle, et on transforme en même temps ce radical en radical sulfato-2 éthyle.

5. Composé selon la revendication 1 qui répond à la formule:

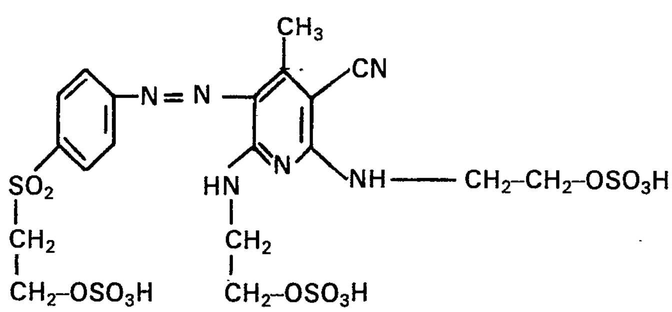

sous la forme de l'acide ou sous la forme d'un sel.

6. Composé selon la revendication 1 qui répond à la formule:

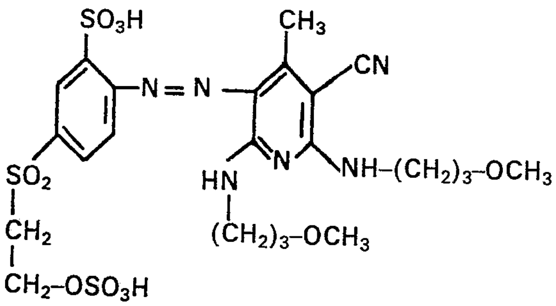

ou sel de ce composé.

7. Composé selon la revendication 1 qui répond à la formule:

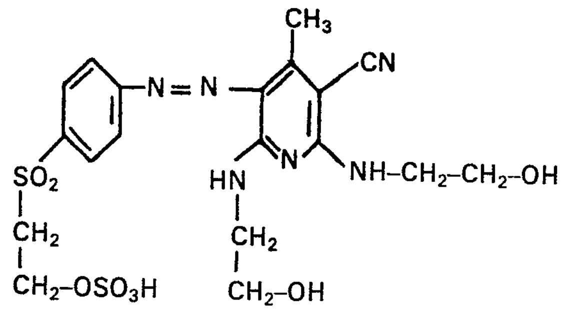

sous la forme de l'acide ou sous la forme d'un sel.

8. Composé selon la revendication 1 qui répond à la formule:

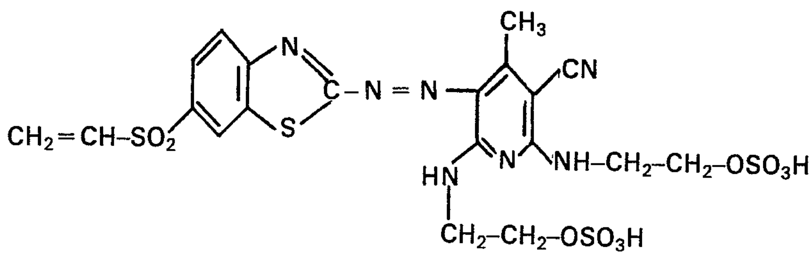

sous la forme de l'acide ou sous la forme d'un sel.

9. Application des composés selon la revendication 1 comme colorants.

10. Application selon la revendication 9 pour la teinture ou l'impression de fibres cellulosiques, de fibres polyamidiques naturelles ou synthétiques ou du cuir.

## Claims

1. Water-soluble azo compounds which have the general formula (1)

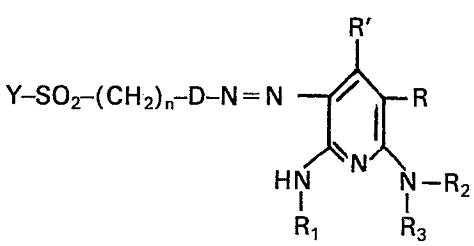

(1)

in which

Y is the vinyl group or a group of the formula $-CH_2-CH_2-Z$ in which Z denotes an inorganic or organic radical which can be eliminated under alkaline conditions, or denotes a hydroxy group;

n ist the number zero, 1 or 2;

D is the phenylene or naphthylene radical which can be substituted by 1 or 2 substituents belonging to the group comprising lower alkyl, lower alkoxy, hydroxy, lower alkanoylamino, benzoylamino, benzoylamino which is substituted by lower alkyl, lower alkoxy, chlorine and/or sulfo, chlorine, bromine, fluorine and carboxy, and/or by 1 nitro group and/or by 1 sulfo group, or is the divalent phenylazophenyl, phenylazonaphthyl, naphthylazophenyl or naphthylazonaphthyl radical in which each phenyl and naphthyl radical can be substituted by 1 or 2 substituents belonging to the group comprising lower alkyl, lower alkoxy, hydroxy, chlorine, bromine and fluorine, and/or by a lower alkanoylamino, sulfo or carboxy group, or is the benzthiazol-2-yl radical which can be substituted in the benzene nucleus by a substituent belonging to the group comprising lower alkyl, lower alkoxy, hydroxy, lower alkanoylamino, benzoylamino, benzoylamino which is substituted by lower alkyl, lower alkoxy, chlorine and/or sulfo, nitro, chlorine, bromine, fluorine and sulfo;

R is a hydrogen atom, but is preferably a cyano, lower carbalkoxy, carbophenoxy or carbamoyl group or a carbamoyl group which is monosubstituted or disubstituted by lower alkyl and/or phenyl, or is a lower alkylsulfonyl or an arylsulfonyl group;

R' is a hydrogen atom or a lower alkenyl group or an optionally substituted lower alkyl group or a cycloalkyl group or an aryl radical;

$R_1$ is a hydrogen atom, a sulfonic acid group or a lower alkenyl group, an optionally substituted lower alkyl group, a cycloalkyl group, an aryl radical or a saturated, unsaturated or aromatic heterocyclic radical;

$R_2$ is a hydrogen atom, a lower alkenyl group or an optionally substituted alkyl group;

$R_3$ is a hydrogen atom, a sulfonic acid group or a lower alkenyl group, an optionally substituted

lower alkyl group, a cycloalkyl group, an aryl radical or a saturated, unsaturated or aromatic heterocyclic radical, or

$R_2$ and $R_3$, together with the nitrogen atom, form a heterocyclic, saturated or unsaturated ring which optionally contains a further heteroatom, the formula members $R_1$, $R_2$ and $R_3$ having meanings which are identical with or different from one another, and with the proviso that the compounds of formula (1) contain, in addition to the detachable group Z optionally being water-solubilizing, imperatively at least one sulfonic acid, phosphonic acid, phosphato or sulfato group or two carboxy groups.

2. Process for the manufacture of compounds of the formula (1), mentioned and defined in claim 1, characterized by diazotizing a compound of the general formula (2)

$$Y\text{-}SO_2\text{-}(CH_2)_n\text{-}D\text{-}NH_2 \quad (2)$$

in which D, n and Y have the meanings mentioned in claim 1, and coupling with a coupling component of the general formula (3)

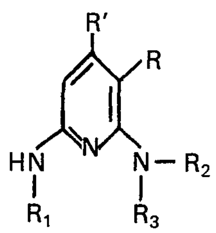

(3)

in which R, R', $R_1$, $R_2$ and $R_3$ have the meanings mentioned in claim 1, and optionally in the event that Y is the β-hydroxyethyl group and/or one or two or three of the formula units $R_1$, $R_2$ and $R_3$ represent an alkyl group which is substituted by hydroxy or lower hydroxyalkoxy, converting this β-hydroxyethyl group of the formula unit Y and one or more of these hydroxy groups in $R_1$, $R_2$ and $R_3$ into the corresponding sulfato or phosphato derivatives by means of a sulfating agent or a phosphating agent, respectively, the two reactants in this diazotization and coupling reaction being selected in such a way that at least one of them contains at least one of the abovementioned water-solubilizing groups in addition to the fiber-reactive group (corresponding to Y) optionally being water-solubilizing, or contains a sulfatable or phosphatable hydroxy group which may subsequently be esterified with a sulfating or phosphating agent, respectively.

3. A process for the manufacture of compounds of the general formula (1) of claim 1, in which the formula units R, R', $R_1$ and/or $R_3$ denote an aryl radical and/or denote a group containing an aryl radical, one or two of these aryl radicals having one or two sulfo grups, and/or these formula units containing a sulfatoalkyl group and/or denote a sulfatoalkyl group, characterized by that an azo compound which corresponds to the general formula (1), but in which the formula units R, R', $R_1$ and/or $R_3$ denote and/or contain an aryl radical which aryl radicals do not have sulfo groups or have only one sulfo group altogether, and/or one more of these formula units has one of the abovementioned alkyl groups which are substituted by hydroxy, is reacted with a sulfonating agent introducing thereby one or two sulfo groups into the aryl radical(s) and/or esterifying the hydroxy group(s) to give the sulfato group(s).

4. Process according to claim 3, characterized in starting from an azo compound of the general formula (1) as defined in claim 3, in which Y is the β-hydroxyethyl group, and converting this group at the same time into the β-sulfatoethyl group.

5. The compound according to claim 1, of the formula

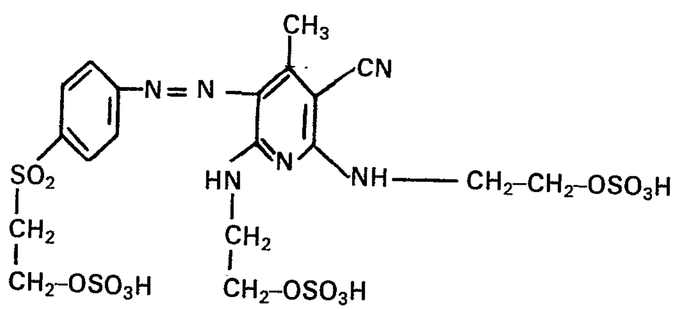

in the form of the acid or in the form of a salt.

6. The compound according to claim 1, of the formula

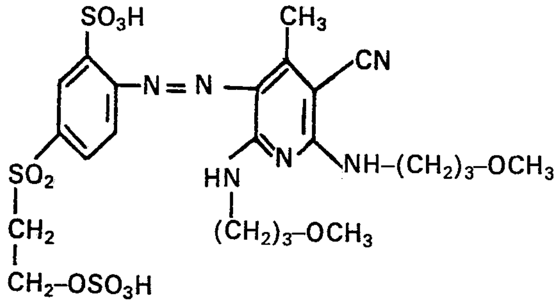

or a salt of this compounds.

7. The compound according to claim 1, of the formula

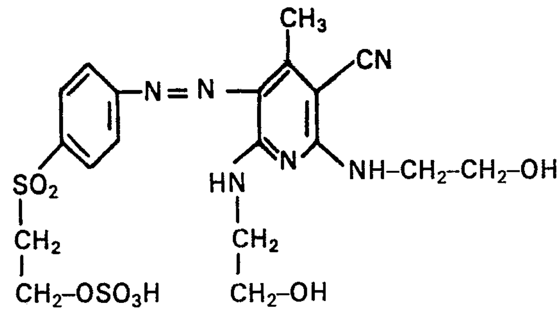

in form of the acid or in the form of a salt.

8. The compound according to claim 1, of the formula

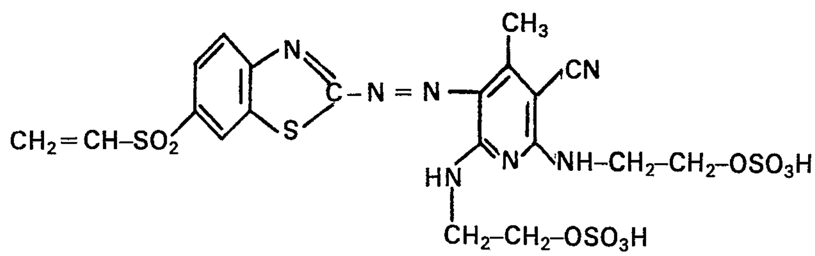

in the form of the acid or in the form of a salt.

9. The use of the compounds of claim 1 as dyestuffs.

10. Use according to claim 9, for dyeing or printing cellulose fibers, natural or synthetic polyamide fibers or leather.